# EUROPEAN PATENT APPLICATION

(11) **EP 2 642 798 A1**
(43) Date of publication of application: **25.09.2013**
(21) Application number: 10859626.3
(22) Date of filing: 19.11.2010
(51) Int. Cl.: H04W 52/02, H04W 24/10, H04W 36/38, H04W 92/20

(54) **WIRELESS BASE STATION DEVICE, TERMINAL DEVICE, WIRELESS COMMUNICATION SYSTEM, AND WIRELESS COMMUNICATION METHOD IN WIRELESS BASE STATION DEVICE**

(71) Applicant: Fujitsu Limited, Kawasaki-shi, Kanagawa 211-8588 (JP)
(72) Inventor: MURAKAMI Akiko, Kawasaki-shi Kanagawa 211-8588 (JP)
(74) Representative: Fenlon, Christine Lesley
(86) International application number: PCT/JP2010/070693
(87) International publication number: WO 2012/066676

(57) **Abstract**

A radio base station apparatus includes an intermittence determination unit which controls to be transmitted a reference signal over a first transmission period in a second cell, when the intermittence determination unit receives a first message including a quality of a first cell subordinate to the radio base station or a quality of the second cell subordinate to the radio base station apparatus or another radio base station apparatus, measured by the terminal apparatus in the first cell, and when a reference signal is transmitted over a second transmission period shorter than a first transmission period in the second cell; and a handover determination unit which receives a second message including the quality of the second cell measured by the terminal apparatus in the first cell based on the reference signal transmitted over the first transmission period and determines a handover destination based on the quality of the second cell.

## Description

### TECHNICAL FIELD

The embodiments discussed herein are related to a radio base station apparatus, a terminal apparatus, a radio communication system, and a radio communication method in the radio base station apparatus.

### BACKGROUND ART

At present, a radio communication system such as a mobile phone system or a wireless MAN (Metropolitan Area Network) is widely used. In the field of radio communication, to further improve a communication speed and a communication capacity, continuous discussion is held on next-generation communication technology. For example, in the 3GPP (3rd Generation Partnership Project), which is one of standards groups, a radio communication system called LTE (Long Term Evolution) and a radio communication system called LTE-A (Long Term Evolution-Advanced), which is a developed form of the LTE, have been proposed.

In such the radio communication system, a radio base station apparatus (hereinafter referred to as "base station") transmits a reference signal to a terminal apparatus (hereinafter referred to as "terminal"). By using the reference signal, the terminal is allowed to perform synchronous detection or cell search and further measure the state of a radio propagation path. By performing the synchronous detection, the terminal is allowed to transmit or receive data in synchronization with the base station, which allows efficient radio communication to be performed.

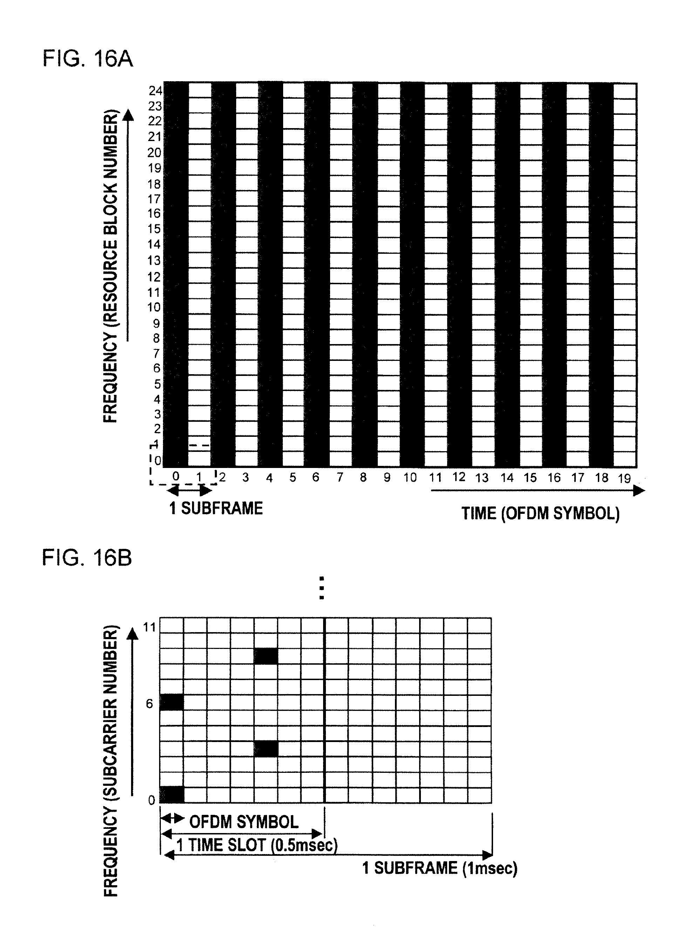

The reference signal is transmitted using a radio resource. The base station manages such radio resources and transmits the reference signal using a given radio resource. FIG. 16A illustrates an example of a configuration of a radio frame in the 5 MHz band. FIG. 16B illustrates an example of a configuration of a resource block also in the 5 MHz band.

The minimum unit of the radio frame is an OFDM (Orthogonal Frequency Division Multiplexing) symbol in a time axis direction (the abscissa direction in FIGS. 16A and 16B) and a subcarrier in a frequency axis direction (the ordinate direction in FIGS. 16A and 16B). In the time axis direction, e.g., one slot (0.5 msec) includes twelve OFDM symbols, and one subframe (1 msec) includes two time slots. In the frequency axis direction, e.g., one resource block includes twelve subcarriers, and includes twenty-five resource blocks when the radio band is the 5 MHz band. Note that one resource block includes, e.g., twelve subcarriers and seven OFDMA symbols.

In FIGS. 16A and 16B, each of the black blocks represents an example of the radio resource used to transmit the reference signal. For example, when slot number is allocated to the reference signal as illustrated in FIG. 16A, the reference signal is transmitted using even-numbered slots. The terminal is allowed to receive the reference signal based on, e.g., radio resource allocation information (scheduling information) transmitted from the base station.

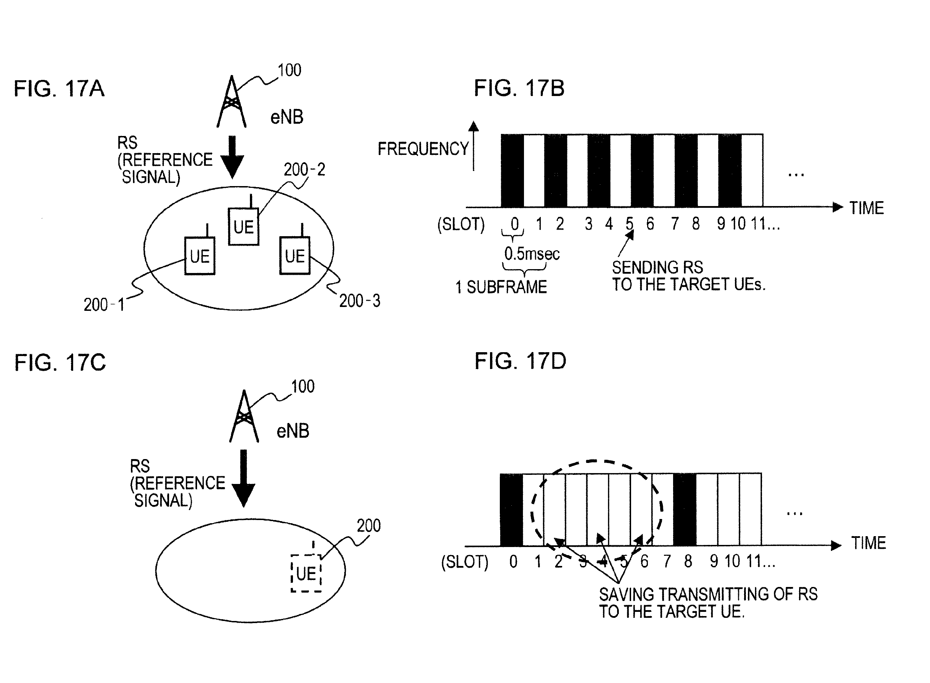

FIGS. 17A and 17C illustrate each illustrating an example of connection between the base station and the terminal. FIGS. 17B and 17D illustrate an example of the allocation of the radio resource to the reference signal. A base station (eNB: evolutional Node B) 100 is wirelessly connected to a plurality of terminals (UE: User Equipment) 200-1 to 200-3 present in the cell of the base station 100 to be able to transmit the reference signal thereto in parallel.

However, when the terminals 200-1 to 200-3 are not present in the cell of the base station 100 (e.g., FIG. 17C) or when the terminals 200-1 to 200-3 are present but in an idle state in which, e.g., the power source thereof is not turned ON, even if the base station 100 transmits the reference signal, the reference signal is not used. In such a case, the radio resource is used wastefully for the transmission of the reference signal, and consequently power consumed at the base station 100 is also used wastefully.

Accordingly, in such a case where the terminals 200-1 to 200-3 are not present in a cell of the base station 100, the base station 100 transmits the reference signal by intermittent transmission. The intermittent transmission of the reference signal indicates selectively removing one or a plurality of slots from the slots (e.g., even-numbered slots) used for transmission and transmitting the reference signal using the remaining slots. In the example of FIG. 17D, the base station 100 selectively removes the slots with the slot numbers "2", "4", and "6" and transmits the reference signal using the slots with the slot numbers "0", "8", .... Due to the intermittent transmission of the reference signal, there is timing with which the reference signal is not transmitted to allow a reduction in the power consumed at the base station 100.

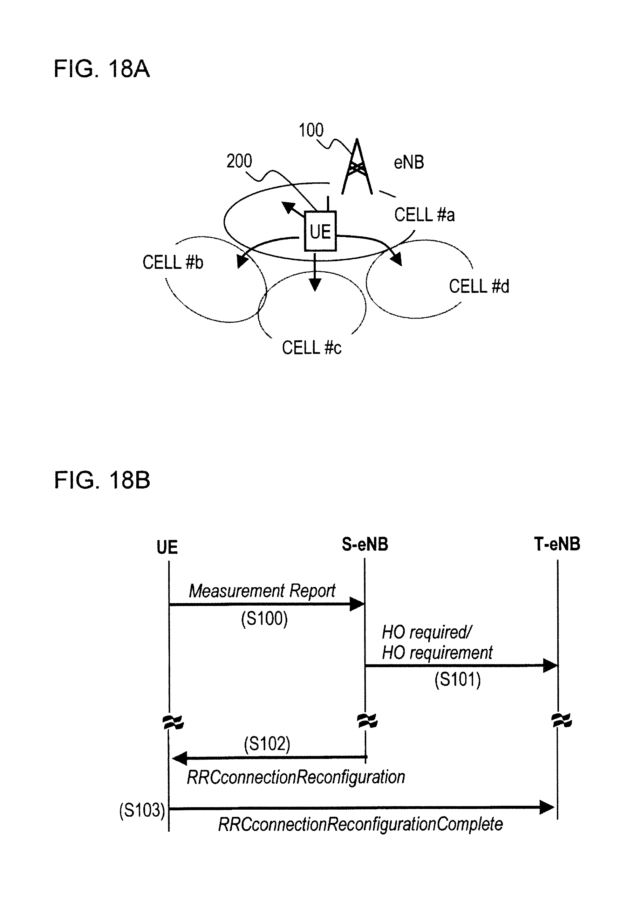

On the other hand, the reference signal may be used when the terminal performs a handover. FIG. 18A illustrates an example of a configuration of the cell and FIG. 18B illustrates an example of the process sequence of the handover. By the handover, a terminal 200 is moved from the cell (hereinafter referred to as "host cell") of the base station to which the terminal 200 is currently connected to a cell (hereinafter referred to as "another cell") of a base station as a handover destination candidate.

Note that, in the following, a handover indicates, e.g., the movement of the terminal 200 from the host cell to anther cell. Another cell as a handover destination candidate is the base station as a handover destination candidate having the other cell subordinate to thereof. The base station as the handover destination candidate may be the base station 100 currently connected to the terminal 200 or another base station different from the base station currently connected to the terminal 200.

The measurement of the quality of the host cell by the terminal 200 is the measurement of the quality by the terminal 200 based on the reference signal transmitted from the base station 100 currently connected to the terminal 200 and having the host cell within the cell range thereof. On the other hand, the measurement of the quality of another cell by the terminal 200 is the measurement of the quality by the terminal 200 based on the reference signal transmitted from a base station including another cell as a handover destination candidate within the cell range thereof to the other cell.

In the example of FIG. 18A, the terminal 200 measures the quality of the host cell (cell #a) and further measures the respective qualities of other cells (cells #b to #d). After measuring the qualities of the host cell and the other cells, the terminal 200 transmits a measurement report message to the base station (S-eNB: Source eNB) 100 currently connected thereto. The measurement report message includes the measurement values of the qualities of the host cell and the other cells. Note that FIG. 18B illustrates an example in which the handover is performed to the base station (T-eNB: Target eNB) as a handover destination other than the base station 100 currently connected to the terminal 200. The sequence of the handover in this case is as follows.

That is, after receiving the measurement report message (S100), the base station 100 currently connected to the terminal 200 determines a handover destination base station based on the measurement values included in the message. The base station 100 transmits a HO required/request message to the determined handover destination base station (S101). The HO required/request message serves as, e.g., a handover request to the handover destination base station.

Thereafter, the base station 100 currently connected to the terminal 200 transmits an RRCconnectionReconfiguration message including information related to the handover destination base station to the terminal 200 (S102). Then, the terminal 200 transmits an RRCconnectionReconfigurationComplete message to the handover destination base station so that the handover is completed (S103). Note that, after the HO required/request message, some of the messages between the HO required/request message and the RRCconnectionReconfiguration message are omitted.

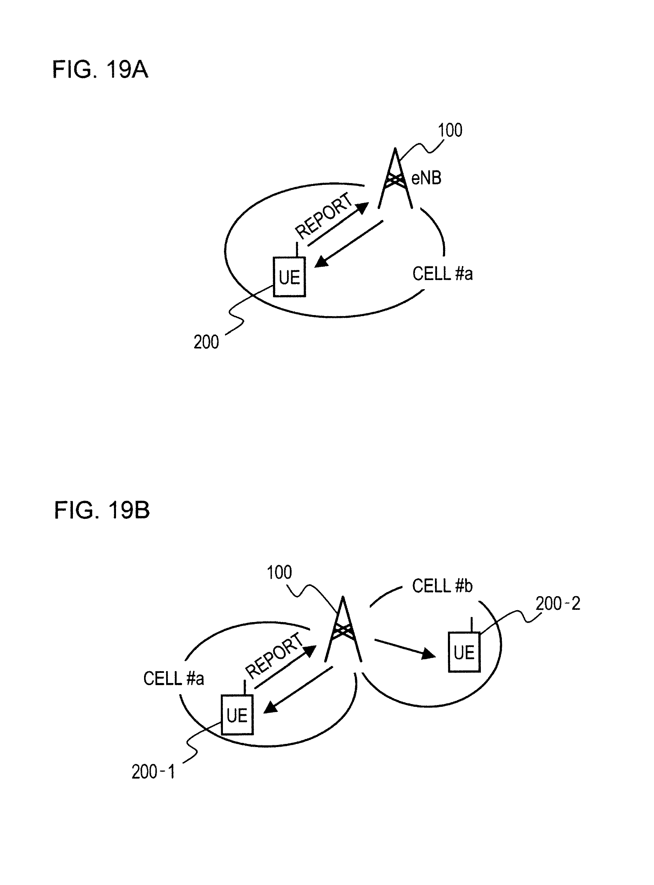

Here, when the terminal 200 reports the measurement values as the measurement report message, there are, e.g., two methods. Each of FIGS. 19A and 19B illustrates an example of such a case.

The first one of the methods is called "s-Measure" (e.g., FIG. 19A). In the s-Measure, the base station 100 preliminarily transmits a threshold value related to the s-Measure to the terminal 200. Then, the terminal 200 measures the quality of the host cell and, when the measurement value becomes not more than the threshold value, the measurement value is added to the measurement report message and transmitted. The s-Measure is used as a threshold value for measuring the quality of the host cell.

The second one of the methods is called "reportStrongestCells" or "reportStrongestCellsForSON". The reportStrongestCells is a method (e.g., FIG. 19B) in which, e.g., the base station 100 preliminarily transmits a threshold value about the reportStrongestCells to the terminals 200-1 and 200-2, and the terminal 200-1 measures the quality of the host cell or another cell. When the measurement value of at least one of the cells becomes not less than the threshold value, the terminal 200-1 transmits the measurement value as the measurement report. On the other hand, the report StrongestCellsForSON is a method in which, e.g., when a terminal 20-1 determines the strongest cell, the measurement value is added to the measurement report message and transmitted. Each of the reportStrongestCells and the reportStrongestCellsForSON is used to measure, e.g., the qualities of the host cell and another cell.

Non-Patent Document 1: 3GPP TS 36.331 V8. 10.0 (2010-06)
Non-Patent Document 2: 3GPP TS 36.133 V8. 10.0 (2010-06)
Non-Patent Document 3: 3GPP TS 36.423 V8. 9.0 (2010-03)
Non-Patent Document 4: 3GPP TS 36.413 V8. 10.0 (2010-06)
Non-Patent Document 5: 3GPP TS 36.300 V8. 12.0 (2010-03)

### SUMMARY OF THE INVENTION

### PROBLEMS TO BE SOLVED BY THE INVENTION

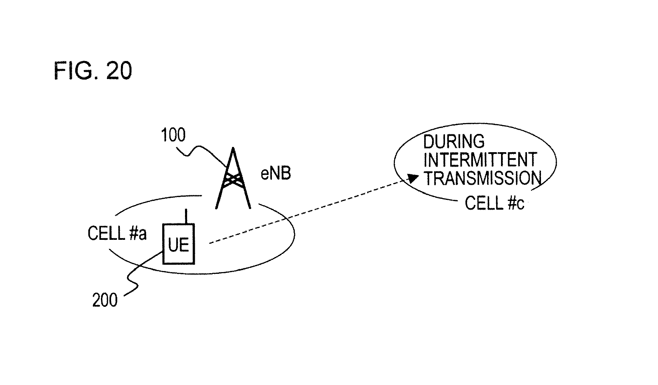

However, when the terminal 200 measures the quality of another cell serving as a handover destination candidate, if the intermittent transmission of the reference signal is performed in the other cell (e.g., see FIG. 20), the terminal 200 may be unable to precisely measure the quality of the other cell. In such a case, the other cell no longer serves as a handover destination candidate for the terminal 200.

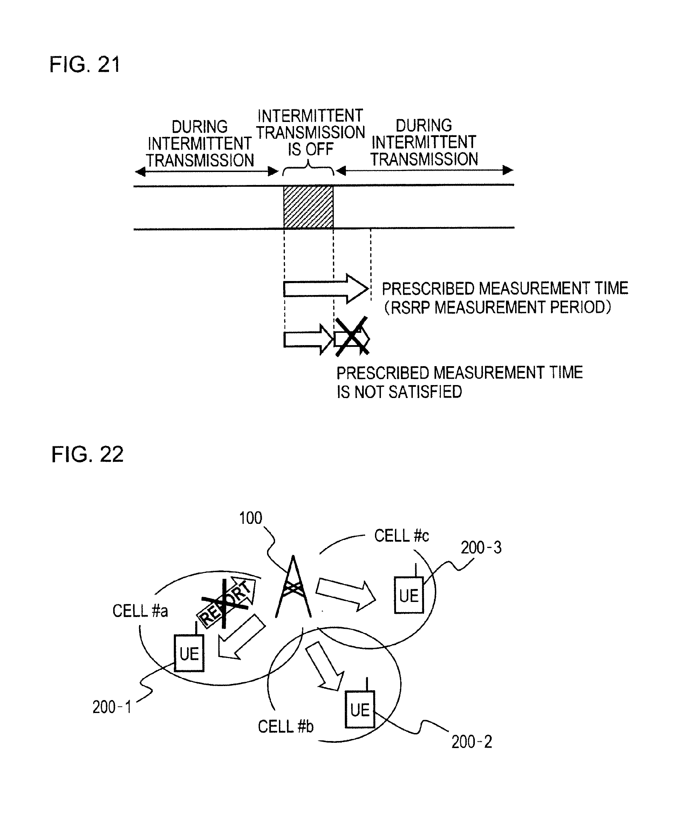

That is, when the terminal 200 measures the quality of the host cell or another cell in accordance with the s-Measure, the reportStrongestCells, or the like, a measurement time is prescribed so that the terminal 200 measures the quality of the next cell or another cell within the prescribed time (e.g., FIG. 21). However, when another cell as a measurement target performs the intermittent transmission of the reference signal, the reference signal is transmitted with timing resulting from selective removal of several slots. As a result, the terminal 200 is unable to measure the quality within the prescribed time. In such a case, the terminal 200 is unable to report the measurement value as the measurement report message. From the viewpoint of the terminal 200, the other cell in which the intermittent transmission is performed no longer serves as a candidate cell for a cell handover destination. As a result, the terminal 200 may be unable to move to the other cell.

Even when the terminal 200 measures the quality of the other cell performing the intermittent transmission, since the slots are selectively removed and then the reference signal is transmitted, the measurement value may be less than the threshold value. For example, when the reportStrongestCells described above is used, if the measurement value of the other cell is less than the threshold value, the terminal 200 is not allowed to transmit the measurement report message (e.g., FIG. 22). In this case also, the other cell no longer serves as a handover destination for the terminal 200. As a result, the terminal 200 may be unable to move to the other cell.

Accordingly, it is an object in one aspect of the invention to a radio base station apparatus which allows a terminal apparatus to move even to a cell in which intermittent transmission of a reference signal is performed, the terminal apparatus, a radio communication system, and a radio communication method in the radio base station apparatus.

### MEANS FOR SOLVING THE PROBLEM

According to an aspect of the embodiments, a radio base station apparatus for performing radio communication with a terminal apparatus, the radio base station apparatus includes an intermittence determination unit which controls to be transmitted a reference signal over a first transmission period in a second cell, when the intermittence determination unit receives a first message including a quality of a first cell subordinate to the radio base station or a quality of the second cell subordinate to the radio base station apparatus or another radio base station apparatus, measured by the terminal apparatus in the first cell, and when a reference signal is transmitted over a second transmission period shorter than a first transmission period in the second cell; and a handover determination unit which receives a second message including the quality of the second cell measured by the terminal apparatus in the first cell based on the reference signal transmitted over the first transmission period and determines a handover destination for the terminal apparatus based on the quality of the second cell.

### EFFECT OF THE INVENTION

It is possible to provide a radio base station apparatus which allows a terminal apparatus to move even to a cell in which intermittent transmission of a reference signal is performed, the terminal apparatus, a radio communication system, and a radio communication method in the radio base station apparatus.

### BRIEF DESCRIPTION OF THE DRAWINGS

FIG. 1 illustrates an example of a configuration of a radio communication system;
FIG. 2 illustrates an example of the configuration of the radio communication system;
FIG. 3 illustrates an example of the configuration of the radio communication system;
FIG. 4 illustrates an example of the configuration of the radio communication system;
FIG. 5 illustrates an example of the configuration of the radio communication system;
FIG. 6 illustrates an example of a configuration of a base station;
FIG. 7 illustrates an example of a configuration of a terminal;
FIG. 8 is a sequence diagram illustrating an example of an overall operation;
FIG. 9 is a flow chart illustrating an example of RS intermittent transmission processing;
FIG. 10 is a flow chart illustrating an example of RS intermittent transmission halt processing;
FIG. 11 is a flow chart illustrating examples of HO processing and intermittence resumption processing;
FIG. 12 is a flow chart illustrating an example of terminal-side processing;
FIG. 13 is a flow chart illustrating an example of the RS intermittent transmission halt processing;
FIG. 14 is a flow chart illustrating an example of the terminal-side processing;
FIGS. 15A to 15C illustrate an example of intermittent transmission timing, and FIG. 5D illustrates an example of the relations among cells;
FIG. 16A illustrates an example of a configuration of a radio frame, and FIG. 16B illustrates an example of a configuration of a resource block;
FIGS. 17A and 17C illustrate an example of the relations between a base station and terminals, and FIGS. 17B and 17D illustrate an example of transmission timing for a reference signal;
FIG. 18A illustrates an example of a configuration of the cells, and FIG. 18B illustrates an example of the sequence of handover processing;
FIGS. 19A and 19B illustrate an example of the relations between the base station and the terminals;
FIG. 20 illustrates an example of the relation between the base station and the terminal;
FIG. 21 illustrates an example of a measurement time for intermittent transmission; and
FIG. 22 illustrates an example of the relations between the base station and the terminals.

### BEST MODE FOR CARRYING OUT THE INVENTION

Referring to the drawings, the embodiments of the present invention will be described below in detail.

### (First Embodiment)

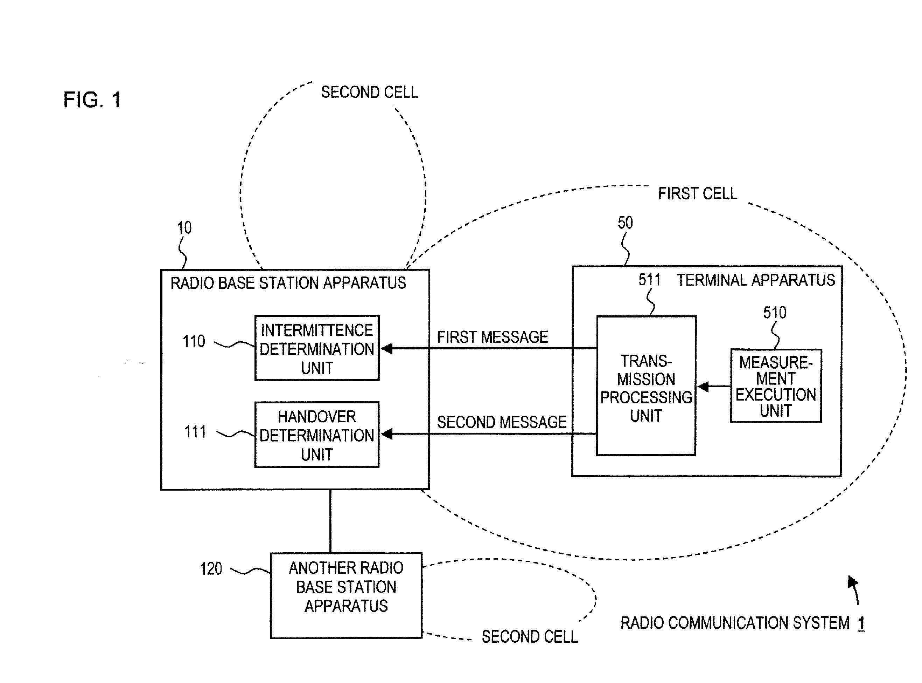

FIG. 1 illustrates an example of a configuration of a radio communication system in the first embodiment. A radio communication system 1 includes a radio base station apparatus 10, a terminal apparatus 50, and another radio base station apparatus 120. The radio base station apparatus 10 and the terminal apparatus 50 perform radio communication. In the example of FIG. 1, the terminal apparatus 50 is located in (or within the range) of a first cell subordinate to the radio base station apparatus 10 and performs radio communication with the radio base station apparatus 10 in the first cell.

The radio base station apparatus 10 includes an intermittence determination unit 110 and a handover determination unit 111.

Upon receipt of a first message including the quality of the first cell subordinate to the radio base station apparatus 10 or a quality of a second cell subordinate to the radio base station apparatus 10 or the other radio base station apparatus 120, the quality being measured by the terminal apparatus 50 in the first cell, when a reference signal is transmitted over a second transmission period shorter than a first transmission period in the second cell, the intermittence determination unit 110 controls to be transmitted the reference signal over the first transmission period in the second cell.

On the other hand, the handover determination unit 111 receives a second message including the quality of the second cell measured by the terminal apparatus 50 in the first cell based on the reference signal transmitted over the first transmission period and determines a handover destination for the terminal apparatus 50 based on the quality of the second cell.

The terminal apparatus 50 includes a measurement execution unit 510 and a transmission processing unit 511.

The measurement execution unit 510 measures the quality of the first or second cell as a first quality and the quality of the second cell as a second quality after the measurement of the first quality.

The transmission processing unit 511 transmits the first message including the first quality and the second message including the second quality to the radio base station apparatus 10.

Upon receipt of the first message when the reference signal is transmitted over the second transmission period (or when intermittent transmission of the reference signal is performed) in the second cell, the radio base station apparatus 10 halts the transmission and controls to be transmitted the reference signal over the first transmission period. This allows the terminal apparatus 50 to precisely measure the quality of the second cell. Since the radio base station apparatus 10 determines the handover destination based on the quality of the second cell, the terminal apparatus 50 is allowed to move even to the cell in which the intermittent transmission of the reference signal is performed by a handover.

### (Second Embodiment)

### <Example of Overall Configuration>

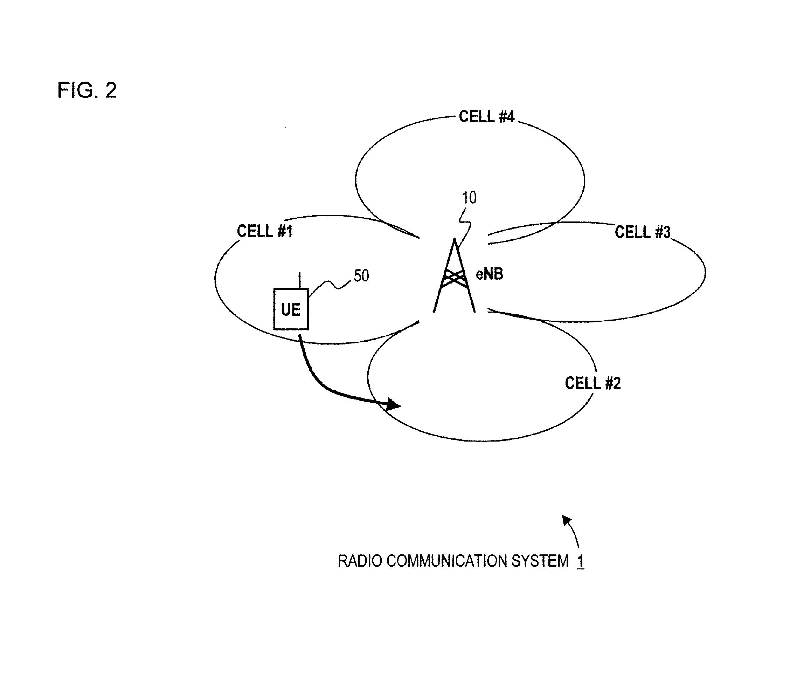

FIG. 2 illustrates an example of the configuration of the radio communication system in the second embodiment. The radio communication system 1 includes the radio base station apparatus (eNB) (hereinafter referred to as "base station") 10, and the terminal apparatus (UE) (hereinafter referred to as "terminal") 50.

The base station 10 includes one or a plurality of cells #1 to #4, and can provide various services by radio communication to the terminal 50 within the range of each of the cells, for example. The base station 10 is capable of parallel radio communication with a plurality of the terminals 50. On the other hand, each of the terminals 50 is connected to the base station 10 to perform radio communication therewith. The terminal 50 is a mobile phone, an information mobile terminal, or the like, for example.

The base station 10 and the terminal 50 are capable of bidirectional radio communication within the range of each of the cells. That is, the base station 10 is capable of performing data transmission (downlink communication) to the terminal 50, while the terminal 50 is capable of performing data transmission (uplink communication) to the base station 10. The base station 10 performs scheduling for each of the downlink communication and the uplink communication and allocates radio resources thereto to perform radio communication. Scheduling information is transmitted appropriately as, e.g., a control signal from the base station 10 to the terminal 50.

The radio communication system 1 illustrated in FIG. 2 illustrates an example in which a handover is performed at the same base station 10. An inter-sector handover (or inter-cell handover) indicates such movement of the terminal 50 between the cells without changing the base station 10 of the handover destination, for example. In the example of FIG. 2, each of the cells #1 and #2 is subordinate to the same base station 10. When one base station 10 includes the plurality of cells #1 to #4, each of the cells #1 to #4 may be called, e.g., a sector. It is assumed that, in the following, the cells and the sectors are used with no distinction unless particularly mentioned.

Note that, in the following embodiments, each of the cells indicates a range in which the base station 10 is capable of providing various services for the terminal 50, for example. A host cell indicates a cell subordinate to the base station 10 when the terminal 50 is connected to the base station 10 in the cell, for example. Another cell indicate a cell subordinate to a base station serving as a handover destination candidate, for example.

A handover indicates movement of the terminal 50 from the host cell to another cell, for example. Another cell as a handover destination candidate is assumed to be used in the same meaning as a base station including the other cell subordinate to thereof and serving as a handover destination candidate, for example. The base station as the handover destination candidate may be the base station currently connected to the terminal 50 or another base station different from the base station currently connected to the terminal 50, for example.

The measurement of the quality of the host cell by the terminal 50 is the measurement of the quality by the terminal 50 based on the reference signal transmitted from the base station 10 currently connected to the terminal 50, for example. On the other hand, the measurement of the quality of another cell by the terminal 50 is the measurement of the quality by the terminal 50 based on the reference signal transmitted from the base station including the other cell as the handover destination candidate subordinate to thereof to the other cell, for example. Connection to each of the cells indicates connection of the terminal 50 to the base station 10 including the cell subordinate to thereof, for example.

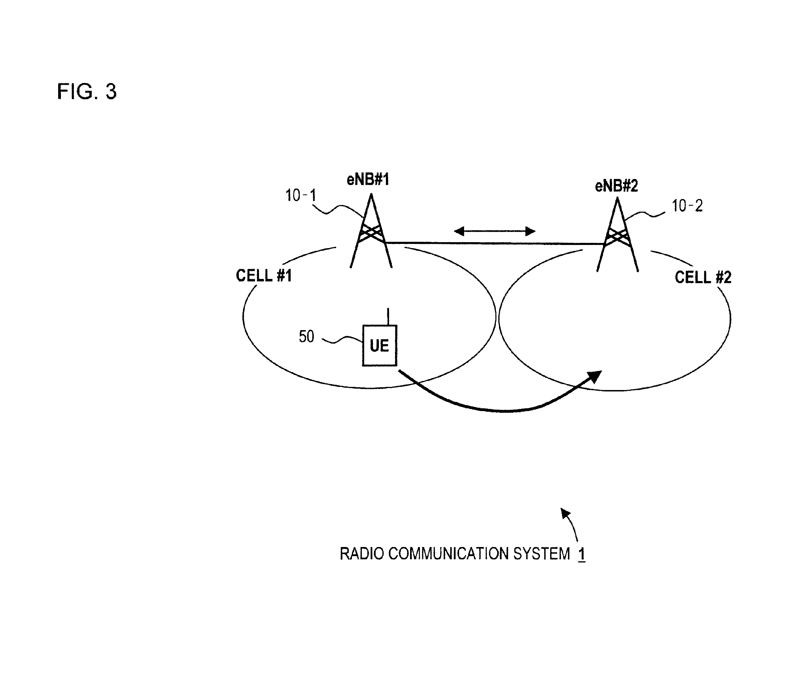

FIG. 3 also illustrates an example of the configuration of the radio communication system 1 in which a handover is performed at a different base station. That is, FIG. 3 illustrates an example in which the terminal 50 moves from the cell #1 subordinate to a base station (eNB#1) 10-1 to the cell #2 subordinate to the base station (eNB#2) 10-2. An inter-base-station handover (or X2 handover) indicates that, e.g., the terminal 50 currently connected to the base station 10-1 switches the connection thereof to the base station 10-2 different from the base station 10-1 and moves between the cells. In the inter-base-station handover, between the base stations 10-1 and 10-2, data, a message, or the like is directly transmitted and received.

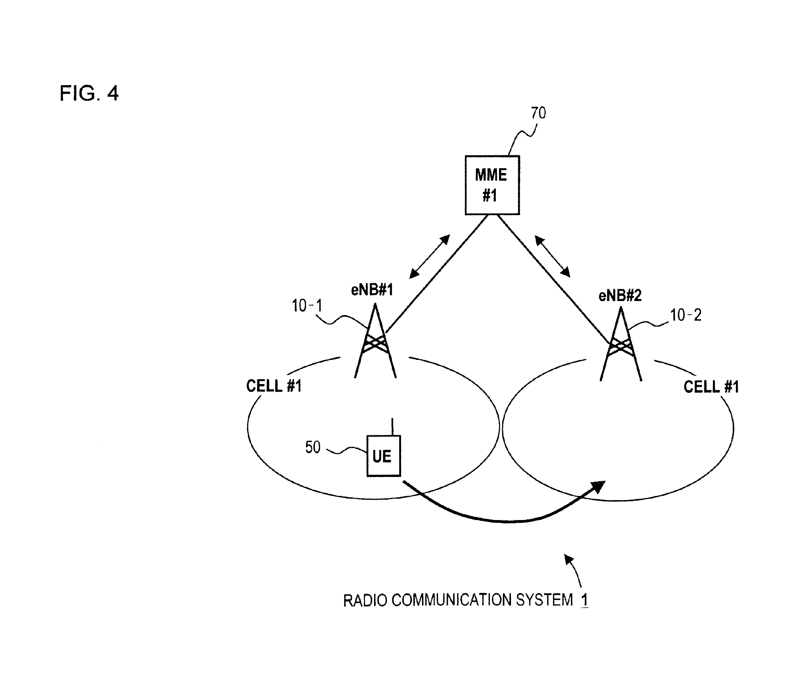

FIG. 4 also illustrates an example of the configuration of the radio communication system 1. The radio communication system 1 further includes a MME (Mobility Management Entity) 70. The MME 70 is connected to the base stations 10-1 and 10-2, and performs the management of movement of the terminal 50, the setting of a data path, and the like, for example. The example of FIG. 4 is an example of the inter-base-station handover, similarly to the example of FIG. 3. However, FIG. 4 illustrates an example in which data, a message, or the like is transmitted and received via the MME 70 as a device higher in order than the base stations 10-1 and 10-2.

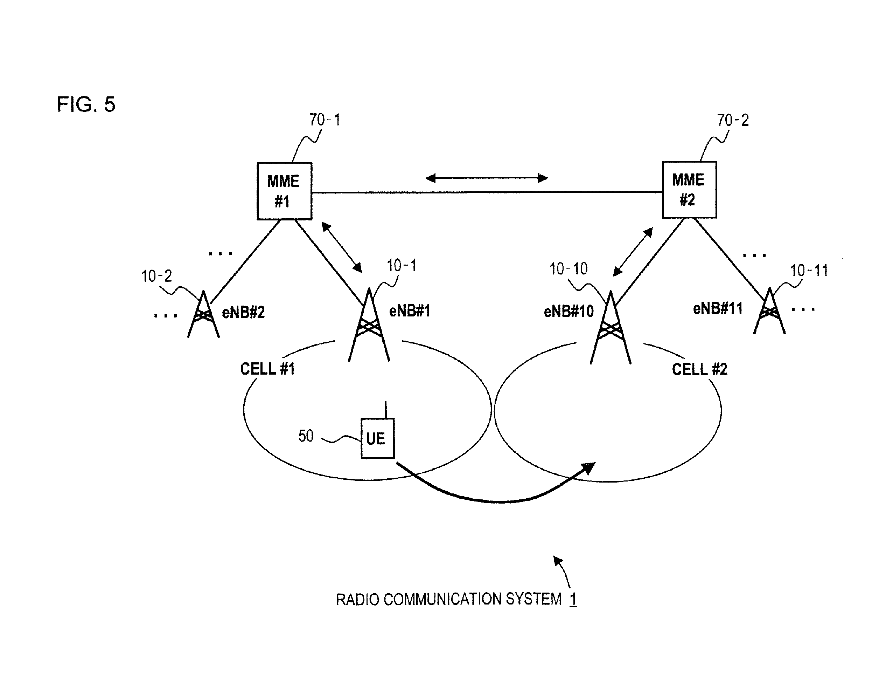

FIG. 5 also illustrates an example of the configuration of the radio communication system 1. The radio communication system 1 further includes a plurality of MMEs 70-1 and 70-2. A handover in this case is an example of movement of the terminal 50 from the cell #1 of the base station 10-1 subordinate to the MME 70-1 to the cell #2 of a base station 10-10 subordinate to the MME 70-2. An inter-MME handover (or S1 handover) indicates that the terminal 50 moves between the cells over the plurality of MMEs, for example. In the inter-MME handover, data, a message, or the like is transmitted and received between the base stations 10-1 and 10-1 via the MMEs 70-1 and 70-2.

Note that each of the examples described above is the same in that a handover is performed by the movement of the terminal 50 from the host cell to another cell.

### <Examples of Configurations of Base Station 10 and Terminal 50>

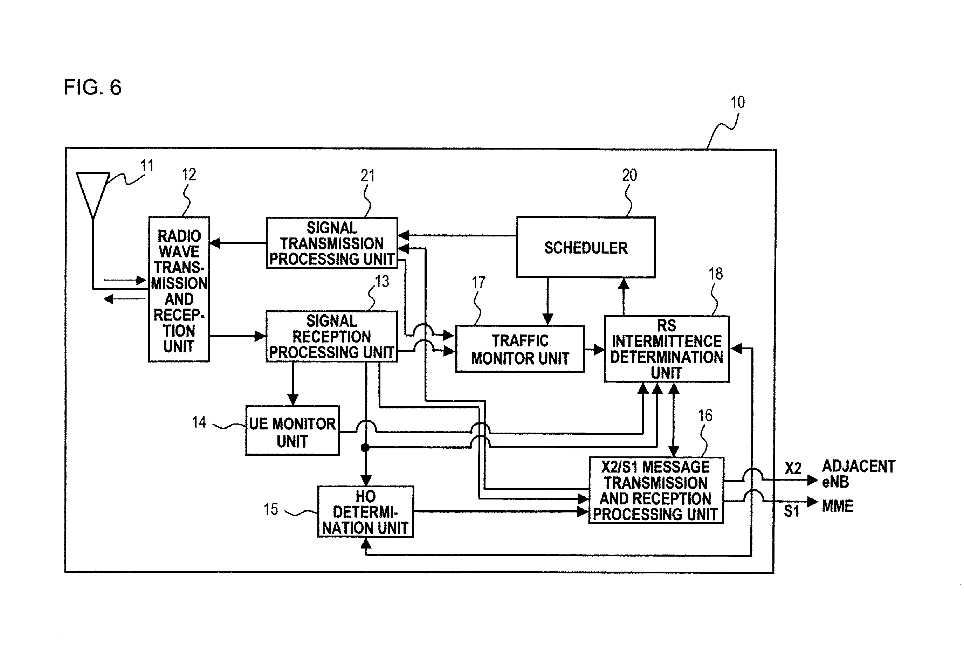

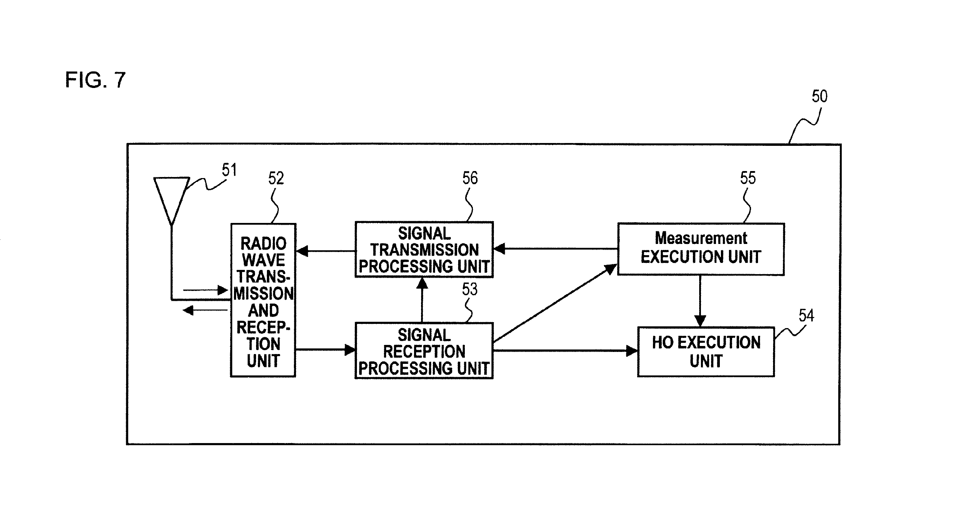

Next, an example of a configuration of each of the base station 10 and the terminal 50 will be described. FIG. 6 illustrates the example of the configuration of the base station 10. FIG. 7 illustrates the example of the configuration of the terminal 50.

The base station 10 includes an antenna 11, a radio wave transmission and reception unit 12, a signal reception processing unit 13, a UE monitor unit 14, a HO determination unit 15, an X2/S1 message transmission and reception processing unit 16, a traffic monitor unit 17, an RS intermittence determination unit 18, a scheduler 20, and a signal transmission processing unit 21. Note that the base station 10 has one or a plurality of cells.

In the first example, the intermittence determination unit 10 corresponds to the antenna 11, the radio wave transmission and reception unit 12, the signal reception processing unit 13, the UE monitor unit 14, the traffic monitor unit 17, and the RS intermittence determination unit 18, for example. On the other hand, the handover determination unit 111 corresponds to the antenna 11, the radio wave transmission and reception unit 12, the signal reception processing unit 13, and the HO determination unit 15, for example.

The antenna 11 receives a radio signal transmitted from the terminal 50 or transmits the radio signal output from the radio wave transmission and reception unit 12 to the terminal 50.

The radio wave transmission and reception unit 12 converts the radio signal received by the antenna 11 to a baseband signal and outputs the baseband signal to the signal reception processing unit 13 or converts the baseband signal output from the signal transmission processing unit 21 to a radio signal and outputs the radio signal to the antenna 11. The radio wave transmission and reception unit 12 includes a frequency converter, a bandpass filter, and the like for the conversion between the radio signal and the baseband signal, for example.

The signal reception processing unit 13 performs demodulation processing, decoding processing, or the like on the baseband signal output from the radio wave transmission and reception unit 12 to extract data or a signal therefrom. When the extracted data includes a UE context, the signal reception processing unit 13 outputs the UE context to the UE monitor unit 14. The UE context includes information represents the cell ID of the cell in which the terminal 50 is located, the ID of the terminal 50, and also a state (such as an active mode) of the terminal 50, and is transmitted from the terminal 50, for example.

When the extracted data includes a measurement report message, the signal reception processing unit 13 outputs the message to the HO determination unit 15 and to the RS intermittence determination unit 18. The measurement report message includes the cell ID of a measurement target, and a measurement value related to the quality of the state of a radio propagation path measured by the terminal 50, for example.

When the extracted data includes a message, the signal reception processing unit 13 outputs the message to the X2/S1 message transmission and reception processing unit 16, for example. The signal reception processing unit 13 also outputs the extracted data to the traffic monitor unit 17, for example.

The UE monitor unit 14 monitors the UE context output from the signal reception processing unit 13 to monitor the cell in which the terminal 50 connected to the base station 10 is located and the state of the terminal 50, for example. When the terminal 50 is brought into an idle state or the power source thereof is cut off, for example, the terminal 50 does not transmit the UE context. Therefore, when the UE context of a given cell is not input thereto from the signal reception processing unit 13, the UE monitor unit 14 can detect that, in the cell, each of the terminals 50 is brought into the idle state or the like, for example. The UE monitor unit 14 outputs the result of monitoring to the RS intermittence determination unit 18. The result of monitoring includes whether or not the UE context is received from each of the UEs (or whether or not each of the UEs is in an active state), the presence of a cell which no longer receives the UE context, if any, and the cell ID of the cell, for example.

The HO determination unit 15 determines the presence or absence of the execution of a handover, the base station as the handover destination (or the cell as the handover destination), and the like. The HO determination unit 15 determines another cell including the highest measurement value included in the measurement report message as the handover destination, for example. Upon determining that a handover is to be executed, the HO determination unit 15 requests transmission of a message (e.g., HO required/request message), such as a handover request, of the X2/S1 message transmission and reception processing unit 16. The HO determination unit 15 makes the request when the base station including the other cell as the handover destination subordinate to thereof is different from the base station 10 currently connected to the terminal 50 and does not make the request when the base station including the other cell as the handover destination subordinate to thereof is the same as the base station 10 currently connected to the terminal 50.

Note that, when notified of an RS intermittent transmission mode by the RS intermittence determination unit 18, the HO determination unit 15 does not make a HO determination and, when notified of the halt of the RS intermittent transmission mode by the RS intermittence determination unit 18, the HO determination unit 15 makes a HO determination, for example.

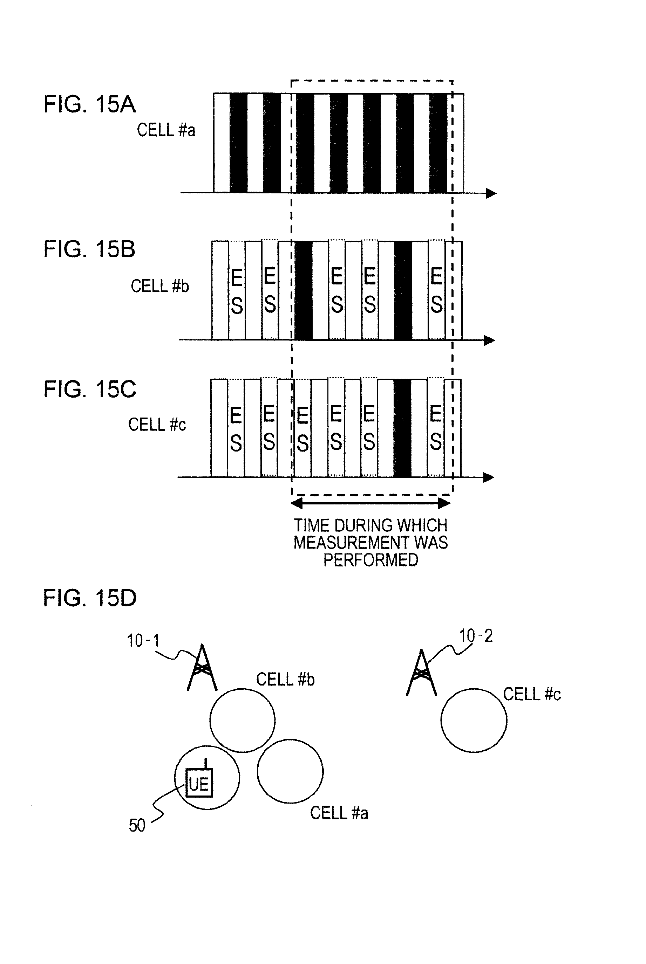

Here, the RS intermittent transmission mode (or ES (Energy Saving) mode) is a mode in which from the slots used for transmission (e.g., even-numbered slots), one or a plurality of the slots are selectively removed and the reference signal is transmitted using the remaining slots used for transmission, as described above (e.g., FIG. 15B), for example. Alternatively, the RS intermittent transmission mode is a mode in which the slots used for transmission are selectively removed and the reference signal is transmitted over the second transmission period shorter than the first transmission period, for example. The halt of the RS intermittent transmission mode is halting the RS intermittent transmission mode and, by the halt, e.g., the reference signal is transmitted to the terminal 50 using the even-numbered slots.

The X2/S1 message transmission and reception processing unit 16 generates an X2 message or a S1 message from the message output from the signal reception processing unit 13 and transmits the X2 message or S1 message to another base station (e.g., an adjacent base station) or the MME 70. The X2 message is a message based on an interface when the message is directly transmitted and received between the base stations, for example. The S1 message is a message based on an interface when the message is transmitted and received to and from another base station via the MME 70, for example.

The X2/S1 message transmission and reception processing unit 16 generates the X2 or S1 message output from the HO determination unit 15 and including the base station ID or cell ID indicating the handover destination or the like, and transmits the X2 or S1 message to another base station or the MME 70. Upon receipt of the notification of the RS intermittent transmission mode from the RS intermittence determination unit 18, the X2/S1 message transmission and reception processing unit 16 generates the X2 or S1 message notifying that the base station 10 is in the RS intermittent transmission mode or the like and transmits the X2 or S1 message to another base station or the MME 70.

On the other hand, the X2/S1 message transmission and reception processing unit 16 can also receive the X2 or S1 message and outputs the received message to the signal transmission processing unit 21. When the received message includes the notification of the intermittent transmission mode from another base station, the X2/S1 message transmission and reception processing unit 16 outputs the notification to the RS intermittence determination unit 18.

The traffic monitor unit 17 receives data from the signal reception processing unit 13 and detects the amount of traffic (e.g., an amount of data per unit time) of the data received by the base station 10 (data in an upstream communication link). The traffic monitor unit 17 also receives data from the signal transmission processing unit 21 and detects the amount of traffic of data in a downstream communication link, which is transmitted from the base station 10. The traffic monitor unit 17 outputs the detected amounts of traffic to the RS intermittence determination unit 18. Note that the traffic monitor unit 17 may also receive the scheduling information from the scheduler 20 and detect the amount of traffic in the upstream or downstream communication link based thereon. The traffic monitor unit 17 outputs the detected amount of traffic to the RS intermittence determination unit 18.

The RS intermittence determination unit 18 determines whether or not the intermittent transmission of the reference signal is to be performed based on the result of monitoring output from the UE monitor unit 14. For example, upon receipt of the notification that the UE context is received in the cell subordinate to thereof as the result of monitoring, the RS intermittence determination unit 18 determines to operate in a normal RS transmission mode (normal RS transmission mode, which will be described later in detail) relative to the cell and notifies the scheduler 20 of the determination. Upon receipt of the notification that the UE context is not present in the cell subordinate to thereof as the result of monitoring, the RS intermittence determination unit 18 determines to operate in the RS intermittent transmission mode relative to the cell and notifies the scheduler 20 of the determination. In this case, the RS intermittence determination unit 18 determines an intermittence cycle based on the amounts of traffic output from the traffic monitor unit 17 and notifies the scheduler 20 of the intermittence cycle.

Note that, upon determining that the RS intermittent transmission mode is to be implemented, the RS intermittence determination unit 18 outputs the cell ID of the cell to be in the RS intermittent transmission mode and the intermittent transmission cycle to the X2/S1 message transmission and reception processing unit 16. This allows another base station as a handover destination candidate to be notified of the fact that the cell in the base station 10 is in the RS intermittent transmission mode.

The RS intermittence determination unit 18 outputs the cell ID of the cell in the RS intermittent transmission mode and the intermittent transmission cycle to the scheduler 20. The scheduler 20 performs scheduling such that the cell ID of the cell in the RS intermittent transmission mode and the intermittent transmission cycle are transmitted as broadcast information (SIB).

When the base station 10 receives the measurement report message while another cell subordinate to thereof or another cell subordinate to another base station as the handover destination candidate is in the RS intermittent transmission mode, the RS intermittence determination unit 18 determines to halt the RS intermittent transmission mode. The details thereof will be described later.

When transmitting data or a signal to the terminal 50 (downstream communication link) or receiving data or a signal transmitted from the terminal 50 (upstream communication link), the scheduler 20 performs allocation of a radio resource to be used for the transmission or reception (or scheduling). As described above, the scheduler 20 performs the scheduling of the reference signal based on the notification from the RS intermittence determination unit 18, for example.

Upon receipt of the notification of the normal RS transmission mode, the scheduler 20 performs scheduling such that transmission is performed using the radio resource in which even-numbered slots is determined in advance, for example. Upon receipt of the notification of the RS intermittent transmission mode, the scheduler 20 further performs the scheduling of an intermittent transmission target cell such that the intermittent transmission of the reference signal is performed in accordance with the intermittent transmission cycle, for example. The scheduler 20 outputs the result of the scheduling as scheduling information to the signal transmission processing unit 21.

The signal transmission processing unit 21 performs coding processing, modulation processing, or the like on the user data output from the X2/S1 message transmission and reception processing unit 16 and outputs the user data so as to allow the user data to be transmitted in accordance with the scheduling information. The signal transmission processing unit 21 generates the reference signal and outputs the reference signal such that the reference signal is transmitted in accordance with the scheduling information from the scheduler 20.

FIG. 7 illustrates an example of a configuration of the terminal 50. The terminal 50 includes an antenna 51, a radio wave transmission and reception unit 52, a signal reception processing unit 53, a HO execution unit 54, a Measurement execution unit 55, and a signal transmission processing unit 56.

In the first embodiment, the measurement execution unit 510 corresponds to the Measurement execution unit 55, and the transmission processing unit 511 corresponds to the signal transmission processing unit 56, the radio wave transmission and reception unit 52, and the antenna 51, for example.

The antenna 51 receives the radio signal transmitted from the base station 10 and outputs the radio signal to the radio wave transmission and reception unit 52 or transmits the radio signal output from the radio wave transmission and reception unit 52 to the base station 10.

The radio wave transmission and reception unit 52 converts the radio signal received by the antenna 51 to a baseband signal and outputs the baseband signal to the signal reception processing unit 53 or converts the baseband signal output from the signal transmission processing unit 56 to a radio signal and outputs the radio signal to the antenna 51. The radio wave transmission and reception unit 52 includes a frequency converter, a bandpass filter, and the like for the conversion between the radio signal and the baseband signal, for example.

The signal reception processing unit 53 performs demodulation processing, decoding processing, or the like on the baseband signal to extract the data or the signal transmitted to the terminal 50 in accordance with the scheduling information. The signal reception processing unit 53 outputs the reference signal, which is included in the extracted signal, to the Measurement execution unit 55. The signal reception processing unit 53 also outputs a message related to a handover transmitted from the base station 10, which is included in the received data, to the HO execution unit 54.

It is assumed that the scheduling information is transmitted as a control signal from the base station 10 using the predetermined radio resource. By receiving the control signal, the terminal 50 receives the scheduling information produced by the base station 10.

The HO execution unit 54 exchanges the message related to a handover with the base station 10. For example, upon receipt of the RRCconnectionReconfiguration message including information related to a handover destination base station, the HO execution unit 54 generates various messages thereafter and transmits the generated messages to the base station 10 via the signal transmission and reception processing unit 56.

The Measurement execution unit 55 measures a received power value (or received power) for the reference signal to measure the quality of the radio propagation path. The measurement value may also be a SINR (Signal to Interference Noise and power Ratio), a SNR (Signal to Noise Ratio), or the like instead of the received power value. The Measurement execution unit 55 measures the quality of the host cell or another cell based on the measurement method reported from the base station 10. The details thereof will be described later.

The reference signal is transmitted by using a radio resource different from one cell to another, for example. The Measurement execution unit 55 is assumed to hold information on which cell uses which radio resource to transmit the reference signal. Through comparison with the radio resource of the received reference signal, the Measurement execution unit 55 can link the cell ID of the measurement target to the measurement value. After the quality measurement, the Measurement execution unit 55 outputs the cell ID of the measurement target cell and the measurement value to the signal transmission processing unit 56.

The signal transmission processing unit 56 performs signal processing such as modulation processing or coding processing on the cell ID and the measurement value to convert the cell ID and the measurement value to a baseband signal and outputs the baseband signal to the radio wave transmission and reception unit 52. By the conversion, the signal transmission processing unit 56 generates the measurement report message including the cell ID and the measurement value, for example. The signal transmission processing unit 56 can also perform signal processing on the user data from another processing unit (not illustrated). The signal transmission processing unit 56 performs processing so as to transmit the measurement report message to the base station 10 in accordance with the scheduling information received by the signal reception processing unit 53.

### <Example of Overall Operation>

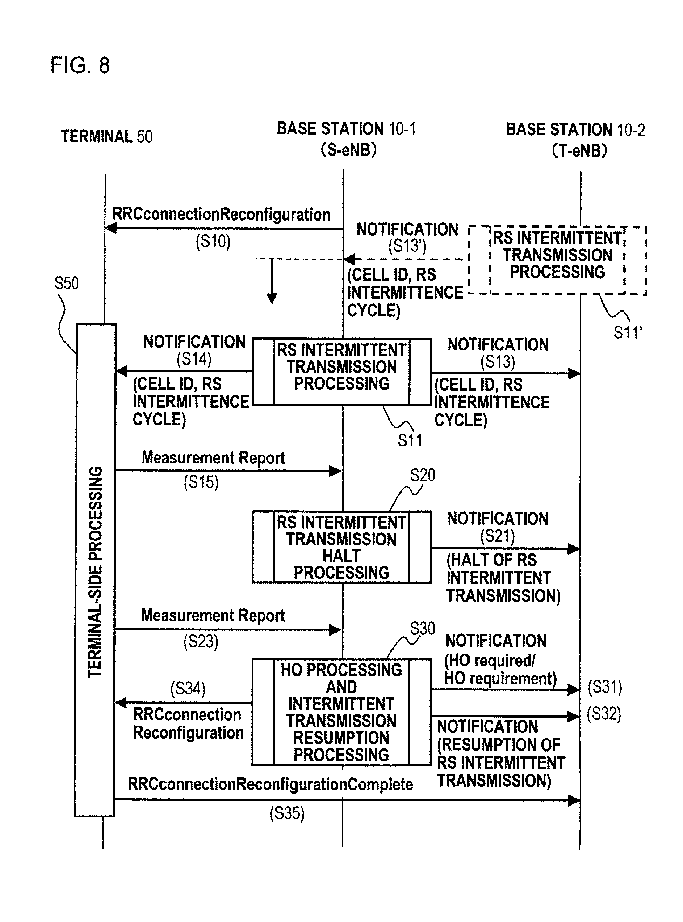

Next, an example of the operation of the radio communication system 1 will be described. FIG. 8 is a sequence diagram illustrating an example of an overall operation in the radio communication system 1. The example illustrated in FIG. 8 illustrates an example (inter-base-station handover) in which the terminal 50 is handed over from the base station 10-1 currently connected thereto to the other base station 10-2. It is assumed that, in the following, the base station 10-1 is referred to appropriately as a source base station (S-eNB) and the base station 10-2 is referred to appropriately as a target base station.

First, a description will be given of an example of an operation at the base station 10-1 and then of an example of an operation at the terminal 50.

### <Example of Operation at Base Station 10-1>

When the power source of the terminal 50 is turned on, the terminal 50 and the base station 10-1 perform connection processing. In this manner, the base station 10-1 becomes the source base station 10-1 for the terminal 50. For example, in the connection processing, the base station 10-1 notifies the terminal 50 of a quality measurement method (S10).

A description will be given below of the quality measurement method using the case where the s-Measure is used as an example. As described above, the s-Measure is for measuring the quality of the host cell, for example. When the measurement value becomes not more than the threshold value, the terminal 50 transmits the measurement value to the source base station 10-1. For example, the scheduler 20 determines that measurement is performed using the s-Measure as well as a threshold value related to the s-Measure and outputs the determinations to the signal transmission processing unit 21. The signal transmission processing unit 21 generates a message (e.g., RRCconnectionReconfiguration message) including information thereon and transmits the message to the terminal 50.

Note that, for the quality measurement of the other cell the reportStrongestCells described above may also be used, and any method may be used as long as the method gives an instruction to perform the quality measurement of the other cell, for example. In this case also, the source base station 10-1 adds the measurement method to the message and transmits the message.

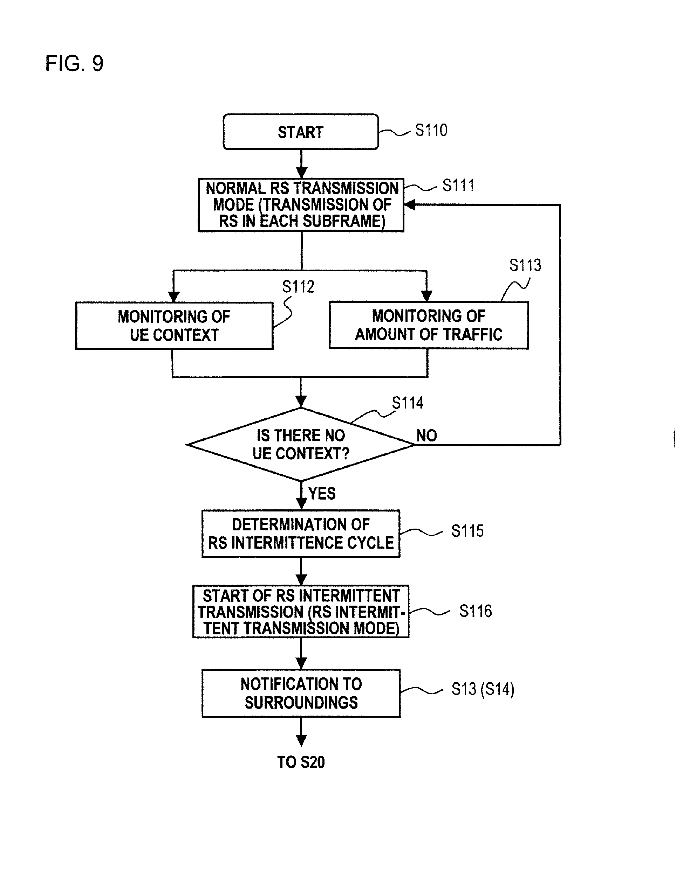

Then, the source base station 10-1 performs RS intermittent transmission processing (S11). FIG. 9 is a flow chart illustrating an example of the RS intermittent transmission processing.

The source base station 10-1 starts processing (S110), and it is assumed that the source base station 10-1 initially operates as the normal RS transmission mode (S111). The normal RS transmission mode is a mode in which the source base station 10-1 transmits the reference signal with normal timing (e.g., in each subframe using even-numbered slots), for example. For example, the scheduler 20 outputs to the signal transmission processing unit 21 the scheduling information indicating which the radios resource is used to transmit the reference signal, and the signal transmission processing unit 21 generates the reference signal based on the scheduling information and transmits the reference signal in the normal RS transmission mode.

Then, the source base station 10-1 monitors the UE context and also monitors the amount of traffic (S112, S113). For example, the UE monitor unit 14 monitors, for each of the cells, the presence or absence of the UE context in the cell, while the traffic monitor unit 17 monitors, for each of the cells, the amount of traffic (e.g., the amount of traffic in the downstream communication link) in the cell. Note that either one of the two processes may be performed first, and the order of the processes is arbitrary. The UE monitor unit 14 outputs the result of monitoring to the RS intermittence determination unit 18, and the traffic monitor unit 17 outputs the amount of traffic to the RS intermittence determination unit 18.

Then, the source base station 10-1 determines whether or not there is a cell in which the UE context is not present (S114). For example, the determination is made by the UE monitor unit 14 by monitoring whether or not the UE context is present in the cell subordinate to the base station 10-1.

When there is the UE context in a given cell (NO in S114), the source base station 10-1 maintains the normal RS transmission mode for the reference signal since the terminal 50 located in the cell is in the active state (S111). For example, upon receipt of the result of monitoring notifying that the UE context is present in a given cell from the UE monitor unit 14, the RS intermittence determination unit 18 notifies the scheduler 20 to schedule the cell to operate in the normal RS transmission mode. The scheduler 20 performs the scheduling of the cell such that the reference signal is transmitted in the normal RS transmission mode. In this manner, the normal RS transmission mode is maintained.

On the other hand, when the UE context is not present in a given cell (YES in S114), the source base station 10-1 determines that the intermittent transmission of the reference signal is to be performed and determines the intermittent transmission cycle (S15). For example, upon receipt of the result notifying that the UE context is not present in the cell as the result of monitoring from the UE monitor unit 14, the RS intermittence determination unit 18 determines a transition to the RS intermittent transmission mode for the cell. Then, the RS intermittence determination unit 18 notifies the scheduler 20 of the cell ID of the cell determined to be in the RS intermittent transmission mode and the determination of operation thereof in the RS intermittent transmission mode. At this time, the RS intermittence determination unit 18 determines the intermittent transmission cycle based on the amount of traffic and notifies the scheduler 20 of the intermittent transmission cycle. For example, the intermittence cycle is preferably shortened as the amount of traffic increases.

Then, the source base station 10-1 starts the intermittent transmission of the reference signal (S116). For example, the scheduler 20 performs scheduling of the cell having the cell ID reported from the RS intermittence determination unit 18 such that the reference signal is transmitted in accordance with the intermittence cycle and outputs the scheduling information to the signal transmission processing unit 21. The signal transmission processing unit 21 generates the reference signal in accordance with the scheduling information and transmits the reference signal via the radio wave transmission and reception unit 12 and the antenna 11. In this manner, in the cell, the reference signal is transmitted in the RS intermittent transmission mode.

Then, the source base station 10-1 notifies the other base station (which is the target base station 10-2 in the present example) and the terminal 50 located in the cell in the intermittent transmission mode that the RS intermittent transmission mode is implemented (S13, S14, e.g., FIG. 8). For example, the target base station 10-2 transmits the cell ID of the cell in which the intermittent transmission is performed and the intermittence cycle as the broadcast information (or SIB: System Information Block) by broadcasting. For example, upon receipt of the cell ID of the RS intermittent transmission target and the intermittent transmission cycle from the RS intermittence determination unit 18, the scheduler 20 performs scheduling for transmission so that the cell ID of the RS intermittent transmission target and the like are transmitted as the broadcast information. On the other hand, the RS intermittence determination unit 18 outputs the cell ID of the RS intermittent transmission target and the intermittent transmission cycle to the X2/S1 message transmission and reception processing unit 16. The X2/S1 message transmission and reception processing unit 16 generates the X2 or S1 message including such information and transmits the X2 or S1 message to the target base station 10-2.

Note that the source base station 10-1 may also change the order of the process in S13 (S14) and the process in S116 and perform the processes.

The foregoing is the example of the RS intermittent transmission processing. Such RS intermittent transmission processing may also be performed even at the target base station 10-2, for example. In this case, upon determining that the intermittent transmission is to be performed, the target base station 10-2 notifies a base station (e.g., the source base station 10-1) serving as a handover destination candidate of the cell ID of the cell as the intermittent transmission target and the intermittent transmission cycle. For example, the X2/S1 message transmission and reception unit of the source base station 10-1 receives the X2 or S1 message from the target base station 10-2, extracts the cell ID of the intermittent transmission target and the intermittent transmission cycle from the message, and outputs the cell ID and the intermittent transmission cycle to the RS intermittence determination unit 18. The RS intermittence determination unit 18 holds the cell ID and the intermittent transmission cycle in a memory. In the example of FIG. 8, the target base station 10-2 determines that the intermittent transmission is to be performed in a cell thereof and notifies the source base station 10-1 of the determination (S11', S13'), and then the source base station 10-1 determines that the intermittent transmission of the reference signal is to be performed (S10).

There may also be a case where the RS intermittent transmission processing is performed in another cell subordinate to the source base station 10-1, for example. For example, in a case where the terminal 50 performs the handed over from the cell #1 (host cell) to the cell #2 (another cell), the above processing case corresponds to a case where each of the cells #1 and #2 is subordinate to the source base station 10-1, and a case where the cell #2 is in the RS intermittent transmission mode. In this case also, the RS intermittence determination unit 18 performs the RS intermittent transmission processing (S11) and determines the cell (e.g., the cell #2) in the RS intermittent transmission mode (S115). In this case, the RS intermittence determination unit 18 determines the intermittent transmission cycle for another cell subordinate to thereof, based on the amount of traffic from the traffic monitor unit 17 (S115) and notifies the scheduler 20 of the cell ID and the intermittent transmission cycle. In this manner, the cell ID and the intermittent transmission cycle are broadcast as the broadcast information into the cell and the reference signal is further transmitted in the intermittent transmission cycle. In this case also, the RS intermittence determination unit 18 holds the cell ID of the cell in the RS intermittent transmission mode and the intermittent transmission cycle in the memory or the like, for example.

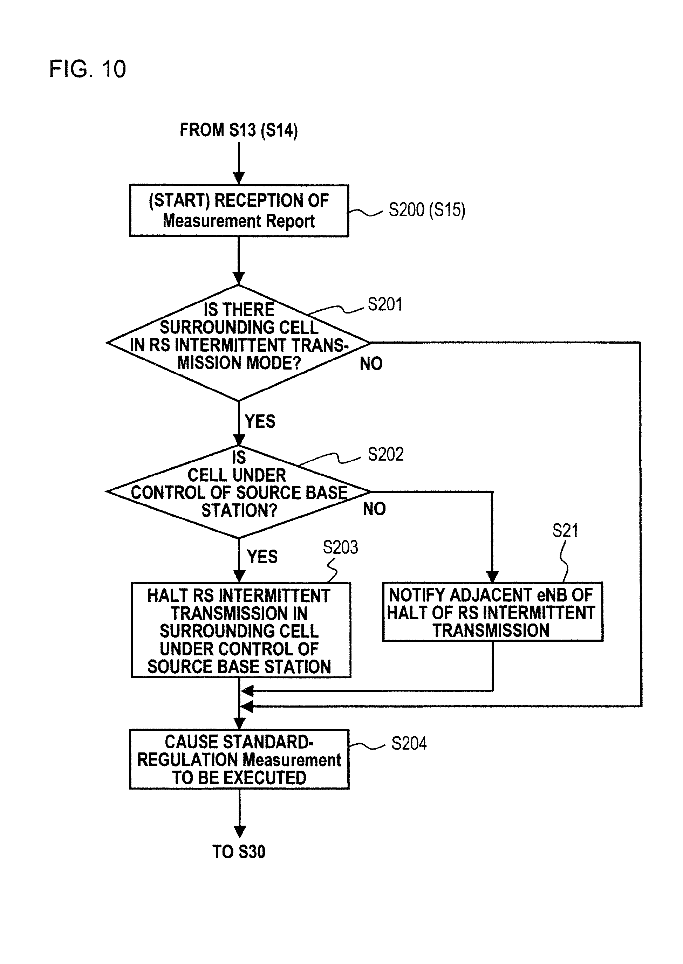

Then, the source base station 10-1 performs RS intermittent transmission halt processing (S20). FIG. 10 is a flow chart illustrating an example of the RS intermittent transmission halt processing.

Firstly, the source base station 10-1 receives the measurement report message for the s-Measure from the terminal 50 (S200, S15). The measurement report message includes the cell ID of the host cell in which the terminal 50 is located and the measurement value of the quality of the host cell. For example, the signal reception processing unit 13 of the source base station 10-1 receives the measurement report transmitted from the terminal 50, extracts the cell ID of the host cell and the measurement value thereof, and outputs the cell ID and the measurement value to the RS intermittence determination unit 18. As a result, the RS intermittence determination unit 18 detects that, at the source base station 10-1, the measurement report message for the s-Measure has been received.

Here, when the terminal 50 transmits the measurement report message for the s-Measure, the quality of the host cell is not more than the threshold value according to the s-Measure so that the host cell is at such a low quality level as to allow the terminal 50 to be handed over. In such a case, the terminal 50 may possibly be handed over from the host cell to another cell. In such a situation, when a part or all of other cells is in the RS intermittent transmission mode, the terminal 50 may be unable to precisely measure the quality of another cell and unable to be handed over to another cell in the RS intermittent transmission mode. Accordingly, upon receipt of the measurement report message for the s-Measure, the source base station 10-1 is triggered by the reception to halt the RS intermittent transmission mode and cause the reference signal to be transmitted in the normal RS intermittent transmission mode.

For this reason, the source base station 10-1 first determines whether or not the RS intermittent transmission mode is implemented in another cell (S201). For example, the RS intermittence determination unit 18 makes a determination based on whether or not the cell ID of the cell in the RS intermittent transmission mode is held in the memory.

When there is another cell in the RS intermittent transmission mode (YES in S201), the source base station 10-1 determines whether or not the other cell is subordinate to thereof (S202). For example, the RS intermittence determination unit 18 makes a determination based on whether the held cell ID of the cell in the intermittent transmission mode is the cell ID of a cell subordinate to thereof or the cell ID of a cell subordinate to another base station.

When the other cell in the RS intermittent transmission mode is a cell subordinate to the source base station 10-1 (YES in S202), the source base station 10-1 halts the intermittent transmission of the reference signal performed in each of the other cells subordinate to thereof and causes the other cells to operate in the normal RS intermittent transmission mode (S203). For example, when the cell ID of the cell in the RS intermittent transmission mode held in the memory is the cell ID of a cell subordinate to thereof, the RS intermittence determination unit 18 notifies the scheduler 20 of the halt of the RS intermittent transmission mode (or the implementation of the normal RS transmission mode) and the cell ID of each of the cells in which the intermittent transmission is performed. Based on the notification, the scheduler 20 performs the scheduling of each of the other cells subordinate to thereof in which the intermittent transmission is performed such that the normal RS transmission mode is implemented. As a result, the intermittent transmission of the reference signal performed in each of the other cells subordinate to the source base station 10-1 is halted and the reference signal is transmitted in the normal RS transmission mode. Note that, e.g., the RS intermittence determination unit 18 notifies the HO determination unit 15 that the RS intermittent transmission mode has been halted and of the cell ID of each of the cells in which the RS intermittent transmission mode has been halted.

Then, the source base station 10-1 causes the terminal 50 to execute standard-regulation Measurement (S204). In this case, the source base station 10-1 does not particularly transmit a message to the terminal 50, and when the source base station 10-1 first receives the measurement report message after halting the intermittent transmission of the reference signal, the source base station 10-1 performs the handover processing based on the measurement values in the message. This is because the received measurement value includes the measurement value of the other cell measured in the normal RS transmission mode.

The measurement report message received here includes the measurement values for the reportStrongestCells (e.g., S10) reported for the measurement of the host cell and another cell, for example. The received measurement values may also include the measurement value measured for the host cell in accordance with the s-Measure, for example. At this time, the measurement of the quality of another cell at the terminal 50 is performed based on the reference signal transmitted in the normal RS transmission mode after the RS intermittent transmission was halted.

On the other hand, when the other cell in the RS intermittent transmission mode is not a cell subordinate to thereof (NO in S202), the source base station 10-1 notifies another base station (including also the target base station 10-2) including another cell subordinate to another base station to halt the RS intermittent transmission mode (or implement the normal RS transmission mode) (S21). For example, when the held cell ID of the target cell is the cell ID of the cell subordinate to another base station, the RS intermittence determination unit 18 notifies the X2/S1 message transmission and reception processing unit 16 at the other base station to halt the RS intermittent transmission mode (or implement the normal RS transmission mode). Base on the notification, the X2/S1 message transmission and reception processing unit 16 generates the X2 or S1 message including the halt of the RS intermittent transmission mode (or the implementation of the normal RS transmission mode) and the cell ID of the target cell and transmits the X2 or S1 message to the other base station. At this time, the RS intermittence determination unit 18 notifies, the HO determination unit 15 that the RS intermittent transmission mode has been halted and of the cell ID of the cell in which the RS intermittent transmission mode has been halted, for example.

Then, the source base station 10-1 causes the terminal 50 to implement the standard-regulation Measurement (S204). In this case also, in the same manner as for the cell subordinate to the source base station 10-1, when the source base station 10-1 first receives the measurement report message after halting the intermittent transmission of the reference signal, handover processing is performed based on the measurement values in the message, for example.

Note that the source base station 10-1 may also be notified of the halt of the RS intermittent transmission mode by another base station (e.g., the target base station 10-1). In such a case, for example, the X2/S1 message transmission and reception processing unit 16 receives the X2 or S1 message from another base station, extracts the halt of the RS intermittent transmission mode and the cell ID of the target cell, and outputs the halt of the RS intermittent transmission mode and the cell ID to the RS intermittence determination unit 18. Upon receipt of the halt of the RS intermittent transmission mode and the cell ID, the RS intermittence determination unit 18 notifies the scheduler 20 of the cell ID of the target and implementation of the normal RS transmission model. The scheduler 20 performs the scheduling of the reference signal in the normal RS transmission mode for the target cell so that the intermittent transmission of the reference signal in the cell subordinate to thereof is halted and the reference signal is transmitted with normal timing (e.g., using even-numbered slots).

On the other hand, when another cell in the RS intermittent transmission mode is not present, the standard-regulation Measurement is implemented (S204). Since the intermittent transmission of the reference signal is not performed in the cell as the handover destination candidate, the source base station 10-1 causes the terminal 50 to implement the standard-regulation Measurement without performing processing such as the halt of the intermittent transmission.

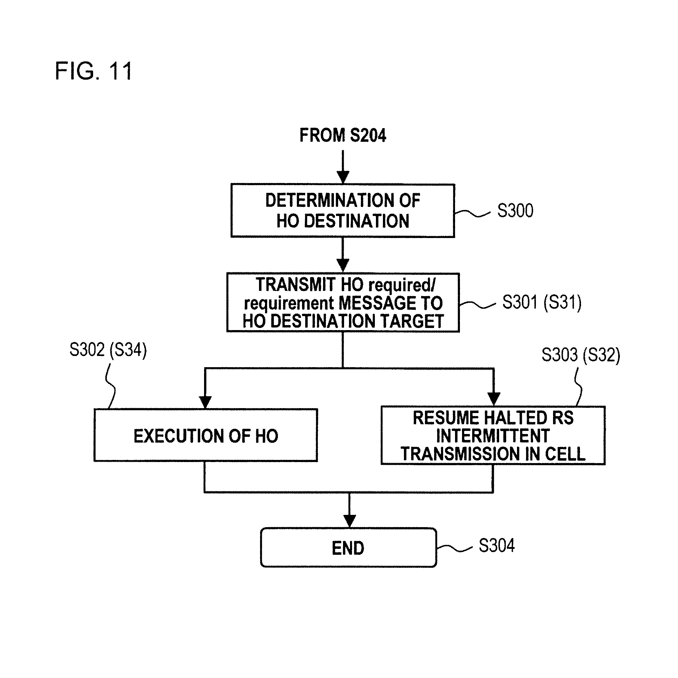

Back to FIG. 8, the source base station 10-1 thus ends the RS intermittent transmission processing (S20), and then performs HO processing and intermittent transmission resumption processing (S30). FIG. 11 is a flow chart illustrating examples of the HO processing and the intermittent transmission resumption processing (S30).

The source base station 10-1 determines a HO destination based on the measurement values (S204) included in the received measurement report message (S300). For example, upon receipt of the halt of the RS intermittent transmission mode from the RS intermittence determination unit 18, the HO determination unit 15 determines a base station (or cell) as the handover destination. For example, the HO determination unit 15 determines the base station including a cell having the highest measurement value subordinate to thereof as the target base station as the handover destination. The target base station may be the source base station currently connected to the terminal 50 or may also be another base station. Hereinbelow, the description will be given using an example in which the target base station is the other base station 10-2.

Then, the source base station 10-1 transmits the HO required/request message to the base station 10-2 as the handover destination target (S301 (S31)). When the destination target is the same as the base station 10-1 currently connected to the terminal 50, the source base station 10-1 need not particularly transmit such a message. The transmission is performed by the HO determination unit 15 by determining the target base station 10-2 and then requesting transmission of a message of the X2/S1 message transmission and reception processing unit 16.

Then, the source base station 10-1 performs handover execution processing (S302 (S34)). The handover execution processing is performed by the source base station 10-1 by notifying the terminal 50 of the identification information of the target base station 10-2 (S34) and by the terminal 50 by giving the RRCconnectionReconfigurationComplete message to the target base station 10-2 (S35), for example. When the other cell as the handover destination is the cell subordinate to thereof, the source base station 10-1 may also notify the terminal 50 of the cell ID of the other cell, for example. For example, the HO determination unit 15 outputs the identification information of the destination target to the scheduler 20, and the scheduler 20 transmits the identification information of the destination target to the terminal 50 via the signal transmission processing unit 21. In this manner, the RRCconnectionReconfiguration message including the identification information of the destination target is transmitted from the source base station 10-1 to the terminal 50. Even when the other cell as the destination target is another base station also, the source base station 10-1 transmits the RRCconnectionReconfiguration message including the identification information of the destination target to the terminal 50. In either case, by such the message, the terminal 50 is allowed to know to where the terminal 50 is finally determined to be handed over.

After transmitting a HO required/request message to the target base station 10-2, the source base station 10-1 causes the halted RS intermittent transmission mode to be resumed (S302 (S32)). It is sufficient for the terminal 50 to be able to measure the quality of the other cell in which the RS intermittent transmission mode has been halted. After the measurement, the base station 10-2 resumes the RS intermittent transmission mode to allow a reduction in the power consumed at the base station 10-2.

However, in the present embodiment, the RS intermittent transmission mode is assumed to be resumed after the source base station 10-1 transmits a handover request message to the target base station 10-2 (S301). This is because, when the target base station 10-2 is determined and the handover request message is transmitted thereto, it can be recognized that the measurement of the quality of the cell in which the intermittent transmission of the reference signal is performed has been precisely performed.

For example, upon determining the transmission of the handover request message (S301), the HO determination unit 15 of the source base station 10-1 notifies the RS intermittence determination unit 18 of the determination, and the RS intermittence determination unit 18 determines to resume the halted RS intermittent transmission mode based on the notification. Upon determining the resumption, the RS intermittence determination unit 18 requests the X2/S1 message transmission and reception processing unit 16 to notify the target base station 10-2 of the cell ID of the cell in which the RS intermittent transmission mode is to be resumed. When the cell as a resumption target is a cell subordinate to thereof, the RS intermittence determination unit 18 notifies the scheduler 20 of the cell ID of the resumption target, and the scheduler 20 performs scheduling of the cell such that the reference signal is transmitted in the RS intermittent transmission mode. When the notification of the resumption of the RS intermittent transmission mode is issued from the target base station 10-2, the X2/S1 message transmission and reception processing unit 16 receives the notification and outputs the notification to the RS intermittence determination unit 18. The RS intermittence determination unit 18 notifies the scheduler 20 of the cell ID of the resumption target included in the notification so that the RS intermittent transmission mode is resumed.

Note that the order of the process in S302 and the process in S303 is arbitrary. After S302 is performed, S303 may be performed, and vice versa.

Then, the source base station 10-1 ends the HO processing and the intermittence resumption processing (S301). Then, the terminal 50 moves to the cell as the handover destination, transmits the RRCconnectionReconfigurationComplete message to the base station 10-2 including the cell subordinate to thereof, for example, and the handover is completed. In this case, the target base station 10-2 serves as the source base station. When the cell as the handover destination is a cell subordinate to the source base station 10-1, such a message need not be transmitted.

### <Example of Operation at Terminal 50>

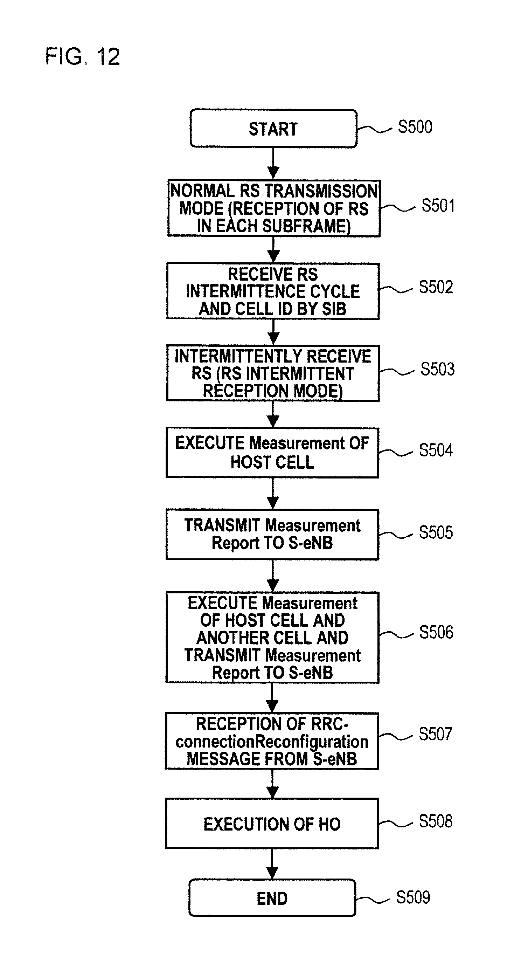

Next, a description will be given of an example of an operation at the terminal 50. FIG. 12 is a flow chart illustrating the example of the operation at the terminal 50. However, it is assumed that, before starting the present processing, the terminal 50 has been notified of a measurement method (the s-Measurement or the like for the host cell) by the RRCconnectionReconfiguration message, for example (S10).

Upon starting the processing (S500), the terminal 50 initially operates in a normal mode. The normal mode is a mode in which the terminal 50 receives the reference signal from the source base station 10-1 with normal timing (e.g., even-numbered slots), for example (S501).

Then, the terminal 50 receives the RS intermittence cycle and the cell ID by the SIB (broadcast information) (S502). For example, upon determining that the intermittent transmission of the reference signal is performed in the host cell (S115, S116), the source base station 10-1 transmits the intermittent transmission cycle and the cell ID of the host cell so that the terminal 50 receives the intermittent transmission cycle and the cell ID. For example, the signal reception processing unit 53 receives the intermittent transmission cycle and the cell ID as the SIB (broadcast information) and outputs the intermittent transmission cycle and the cell ID to the Measurement execution unit 55. The Measurement execution unit 55 holds the intermittent transmission cycle and the cell ID. Note that, when the intermittent transmission is not performed in the host cell, the source base station 10-1 does not transmit the intermittent transmission cycle and the like so that the terminal 50 does not perform the process in S502.

Then, in the host cell, the terminal 50 receives the reference signal from the source base station 10-1 (S503). For example, the signal reception processing unit 53 receives the reference signal and notifies the Measurement execution unit 55 of the reference signal. When the host cell is in the RS intermittent transmission mode, the signal reception processing unit 53 receives the reference signal transmitted in the RS intermittent transmission mode.

Then, the terminal 50 measures the quality of the host cell (S504). When the host cell is in the RS intermittent transmission mode, the terminal 50 measures the quality thereof irrespective of a prescribed measurement time (or in a measurement time longer than the prescribed measurement time). This is because the terminal 50 may be unable to measure the quality within the prescribed time. Accordingly, upon receipt of, e.g., the intermittent transmission cycle and the cell ID (S502), the terminal 50 is triggered by the reception to determine to measure the quality of the host cell irrespective of the prescribed measurement time when measuring the quality of the host cell.

The measurement of the quality is performed by the Measurement execution unit 55, for example. Since it is notified that the quality of the host cell is measured in accordance with the s-Measure, the Measurement execution unit 55 outputs the measurement value when the measurement value becomes not more than the threshold value.

Then, the terminal 50 adds the measurement value to the measurement report message and transmits the measurement report message to the source base station 10-1 (S505). For example, the Measurement execution unit 55 outputs the measurement value to the signal transmission processing unit 56 and the signal transmission processing unit 56 performs coding processing, modulation processing, or the like on the measurement value, thereby generating and outputting the measurement report message including the measurement value. This allows the terminal 50 to report the measurement value according to the s-Measure to the source base station 10-1. Triggered by the report, the source base station 10-1 halts the RS intermittent transmission mode (S200 (S15)).

Then, the terminal 50 measures the qualities of the host cell and the other cell, adds the measurement values to the measurement report message, and transmits the measurement report message (S506). At this time, when measuring the quality of the other cell, the terminal 50 is allowed to precisely measure the quality of the other cell since the intermittent transmission of the reference signal has been already halted in the other cell and the reference signal is transmitted in the normal RS transmission mode. For example, the measurement is performed by the Measurement execution unit 55.

Then, the terminal 50 receives the RRCconnectionReconfiguration message from the source base station 10-1 (S507). At this time, the source base station 10-1 determines the handover destination and, by receiving the message, the terminal 50 is allowed to obtain information related to the base station (or cell) as the determined handover destination. For example, the HO execution unit 54 receives the message via the signal reception processing unit 53. For example, the message includes the base station ID or cell ID of the destination target, and the HO execution unit 54 holds the base station ID or cell ID of the destination target.

Then, the terminal 50 executes handover processing with the target base station 10-2 (S508) and moves to the cell as the handover destination. For example, the HO execution unit 54 transmits the RRCconnectionReconfigurationComplete message to the target base station 10-2.

Then, the terminal 50 ends a sequence of processing (S509).

Thus, when the intermittent transmission of the reference signal is performed in the other cell as the handover destination candidate, triggered by the reception of the quality measurement value for the s-Measure, the source base station 10-1 halts the intermittent transmission and causes the reference signal to be transmitted with normal transmission timing. This allows the terminal 50 to precisely measure the quality of the other cell so that, even when the intermittent transmission of the reference signal is performed in the other cell, the other cell is allowed to also serve as a handover destination.

### <Another Example of Operation>

Next, a description will be given of another example of the operation. In the example described above, the base station 10-1 received the measurement report message for the s-Measure is triggered by the reception (S200) to halt the intermittent transmission of the reference signal and implement the operation in the normal RS transmission mode (S203, S21). In the present example of the operation, the measurement report message is transmitted using a new IE (Information Element), instead of the s-Measure, to trigger the halt of the intermittent transmission of the reference and implement the operation in the normal RS transmission mode. An example of the configuration of the radio communication system 1 and examples of the configurations of the base station 10 and the terminal 50 are the same as the examples described above (e.g., FIGS. 2 to 7).

The overall operation is the same as in FIG. 8. However, the source base station 10-1 notifies that the new IE is used as the measurement method for the other cell (S10) in the measurement report message.

In the present embodiment, the new IE is referred to as a reportCellForES. The reportCellForES is an IE which gives an instruction to issue a report as long as the quality of the other cell can be measured even to the slightest degree, for example. If the terminal 50 received the notification according to the reportCellForES can obtain at least any measurement value, the terminal 50 adds the measurement value and the cell ID of the measurement target cell to the measurement report message and transmits the measurement report message.

Furthermore, an IE is an information element included in the message, and the s-Measure is also one of IEs, for example.

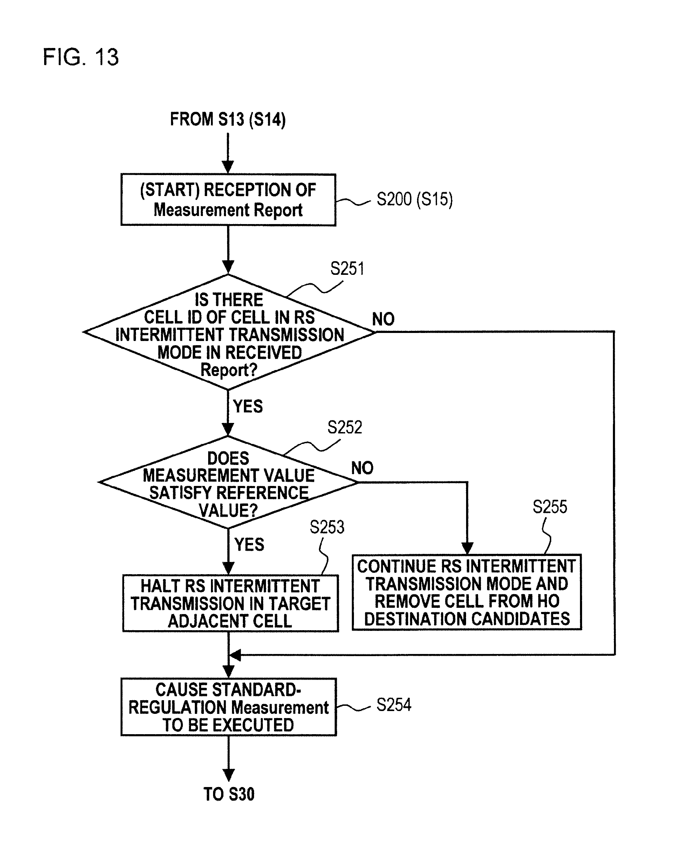

In the overall operation, the RS intermittent transmission processing (S11) is the same as in the case with the s-Measure. The source base station 10-1 can perform the intermittent transmission of the reference signal to the host cell and can also perform the intermittent transmission of the reference signal to another cell subordinate to thereof. The source base station 10-1 can also receive the notification of the RS intermittent transmission mode from another base station (e.g., the target base station 10-2) as a handover destination candidate. Then, the source base station 10-1 performs RS intermittent transmission halt processing (S20) when the reportCellForES is used. FIG. 13 is a flow chart illustrating an example in such a case.

The source base station 10-1 receives the measurement report message from the terminal 50 (S200 (S15)). The measurement report message includes the measurement value for the reportCellForES. Examples of the case where the terminal 50 reports such a measurement value include the case where the quality of another cell can be measured even to the slightest degree and where the terminal 50 can possibly be moved to the other cell by a handover. Therefore, in such a case, the source base station 10-1 halts the intermittent transmission of the reference signal, causes the reference signal to be transmitted in the normal RS transmission mode for the terminal 50 that has notified, and causes the quality to be measured. This allows the terminal 50 to precisely measure the quality of the cell in which the intermittent transmission is performed and move to the cell by a handover. The measurement values for the reportCellForES are input to the RS intermittence determination unit 18 via the signal reception processing unit 13 or the like, for example.

Note that, according to the reportCellForES, in the same manner as in the example using the s-Measure, the source base station 10-1 is assumed to notify the terminal 50 using the RRCconnectionReconfiguration message (S10).

Then, the source base station 10-1 determines whether or not there is the cell ID of the cell in the RS intermittent transmission mode in the received measurement report message (S251). For example, the RS intermittence determination unit 18 makes a determination based on whether or not the held cell ID of the cell in the RS intermittent transmission mode coincides with the cell ID (cell ID as the measurement target) included in the received measurement report message. Note that the held cell ID of the cell in the RS intermittent transmission mode may be any of the cell ID of the host cell, the cell ID of another cell subordinate to the source base station 10-1, and the cell ID of the cell subordinate to another base station.

In the case of using the s-Measure, the source base station 10-1 causes each of the other cells subordinate to thereof in which the intermittent transmission is performed to halt the intermittent transmission. This is because, in the case of using the s-Measure, the source base station 10-1 is notified of the quality of the host cell and is not notified of the quality of another cell. In the present example, the cell ID of another cell is included in the measurement report message. Therefore, when the other cell having the cell ID is in the intermittent transmission mode, the source base station 10-1 is allowed to cause a transition to the normal RS transmission mode using the cell ID.

When the received measurement report message includes the cell ID of the cell in the RS intermittent transmission mode (YES in S251), the source base station 10-1 determines whether or not the measurement value satisfies a reference value (S252). The terminal 50 reports the measurement value irrespective of the prescribed measurement time as long as the quality of another cell can be measured even for a shortest period of time. However, when the measurement value is excessively low, another cell may be inappropriate as the handover destination. In consideration of such a case, to allow movement to the cell having the measurement value sufficient to allow the handover to be performed, the reference value is provided to be used by the source base station 10-1 for comparison.

Accordingly, when the measurement value does not satisfy the reference value (NO in S252), the source base station 10-1 maintains the RS intermittent transmission mode in the cell so as to prevent the handover from being performed (S255). This is because the measured quality does not satisfy a quality sufficient to allow the handover to be performed. For example, when the held cell ID of the cell in the RS intermittent transmission mode coincides with the cell ID included in the received measurement report message, the RS intermittence determination unit 18 compares the measurement value included in the message to the reference value held in advance. For example, when the measurement value is lower than the reference value, the RS intermittence determination unit 18 then maintains the status quo without particularly performing processing.

Then, a sequence of processing is ended (S256).

On the other hand, when the measurement value satisfies the reference value (YES in S252), the source base station 10-1 halts the intermittent transmission in the cell as the target (S253). For example, when the measurement value is larger than the reference value, the RS intermittence determination unit 18 causes the cell having the cell ID included in the measurement report message to halt the intermittent transmission. This is because the measurement value sufficient to allow the cell to serve as a handover destination has been obtained. Since the measurement value for the reportCellForES is the measurement value of another cell, the cell in which the intermittent transmission of the reference signal is to be halted is another cell subordinate to the source base station 10-1 or another cell subordinate to another base station, for example. In the case of halting the intermittent transmission in another cell subordinate to the source base station 10-1, the intermittent transmission is halted by the RS intermittence determination unit 18 by notifying the scheduler 20 of the cell ID included in the measurement report message and the halt of the intermittent transmission. On the other hand, in the case of halting the intermittent transmission in a cell of another base station (including also, e.g., the target base station 10-2), the RS intermittence determination unit 18 outputs the halt of the intermittent transmission and the cell ID included in the measurement report message to the X2/S1 message transmission and reception processing unit 16, for example. In this manner, the base station including the other cell subordinate to thereof is notified of the halt of the intermittent transmission, the intermittent transmission is halted, and the reference signal is transmitted in the normal RS transmission mode.

However, the source base station 10-1 can also halt or maintain the intermittent transmission of the reference signal irrespective of whether or not the measurement value satisfies the reference value. FIGS. 15A to 15C illustrate an example of timing for the intermittent transmission of the reference signal in each of the cells, and FIG. 15D illustrates an example of the relations among the individual cells. For example, the cell #a is in the normal RS transmission mode, and each of the cells #b and #c is in the RS intermittent transmission mode. However, the intermittence cycle is longer in the cell #c than in the cell #b.

In such a case, as illustrated in FIG. 15D, when the terminal 50 measures the quality of the cell #c, the measurement value of the cell #c is the lowest in comparison with that of each of the cells #a and #b. In such a case, even when the measurement value of the cell #c is lower than the reference value, if a handover to the cell #c is designed in advance, it is also possible to halt the RS intermittent transmission mode. This allows the terminal 50 to precisely measure the measurement value for the cell #c. On the other hand, if the handover to the cell #c is designed not to be performed, even when the measurement value satisfies the reference value, it is also possible to maintain the RS intermittent transmission mode in the cell #c. This reduces the possibility of a handover to the cell #c.

Thus, it is also possible to halt or maintain the intermittent transmission according to rules in a handover destination designed in advance. For example, the RS intermittence determination unit 18 may also hold information related to a designed (configured) handover destination cell and give priority to the information in the present processing (S252) in determining the halt or maintenance of the RS intermittent transmission mode.

Back to FIG. 13, when NO is given in S251 or when the processing in S253 is ended, the source base station 10-1 causes the standard-regulation measurement to be executed (S254). In the same manner as in the process (S204) when the s-Measure is used, for example, when the source base station 10-1 first receives the measurement report message after halting the intermittent transmission of the reference signal, handover processing is performed based on the measurement values in the message. The measurement report message in this case may include the measurement value according to the s-Measure for the host cell and the measurement value according to the reportStrongestCells for another cell, for example. Thereafter, based on these measurement values, for example, the HO determination unit 15 performs processing such as determination of the handover destination. On the other hand, the source base station 10-1 performs processing for resuming the intermittent transmission in the destination target in the same manner as in the case of using the s-Measure (S303 (S32)).

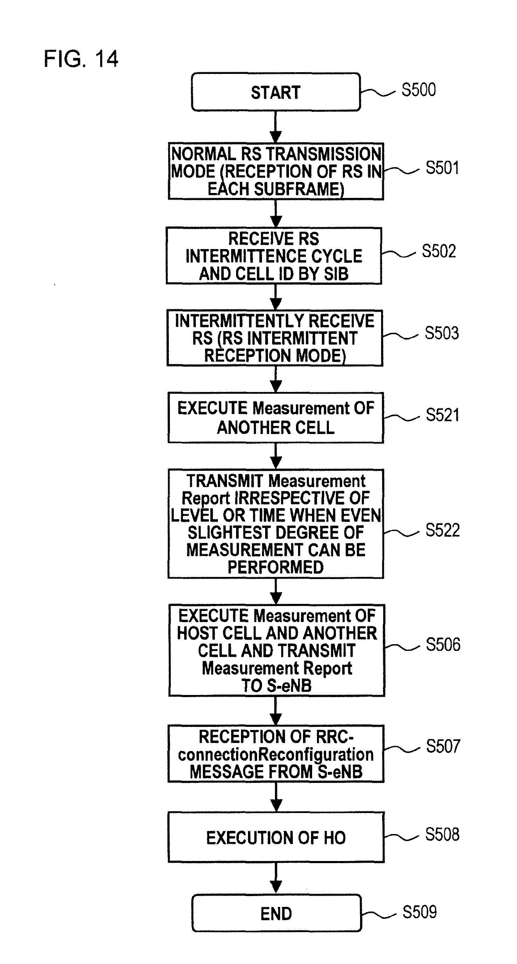

FIG. 14 is a flow chart illustrating an example of an operation in terminal-side processing (S50) in the case of using the reportCellForES. After started (S500), the processing is the same as in the case with the s-Measure up to the intermittent reception of the reference signal (S503). It is assumed that, in connection processing, the terminal 50 is notified that the quality of another cell is measured in accordance with the reportCellForES by the RRCconnectionReconfiguration message (S10).

Then, the terminal 50 measures the quality of another cell based on the reportCellForES (S521). For example, the Measurement execution unit 55 measures the quality by measuring a reception level based on the reference signal received in the signal reception processing unit 53.

Then, as long as the terminal 50 can measure the quality even to the slightest degree, the terminal 50 transmits the Measurement report message including the measurement value to the source base station 10-1 (S522). For example, if there is even the lowest reception level of the reference signal from another cell, the Measurement execution unit 55 outputs the reception level as the measurement value to the signal transmission processing unit 56. The signal transmission processing unit 56 generates the Measurement report message including the measurement value and transmits the Measurement report message.

When the measurement value satisfies the reference value (or when the measurement value is not less than the reference value), the source base station 10-1 halts the intermittent transmission of the reference signal in the other cell. This allows the terminal 50 to measure the measurement value based on the reference signal transmitted with the normal timing. For example, the measurement method in this case may be the measurement method for the reportCellForES described above for the other cell and the measurement method according to the reportStrongestCells or the s-Measure for the host cell. In either case, for example, it is assumed that the connection processing, the base station 10-1 has notified the terminal 50 of the measurement method (S10).

Thereafter, the terminal 50 performs the HO processing or the like in the same manner as in the case of using the s-Measure (S506 to S509).

### EXPLANATION OF REFERENCE NUMERALS

- 1:: Radio Communication System
- 10:: Radio Base Station Apparatus (Base Station)
- 10-1, 10-2, 10-10, and 10-11:: Radio Base Station Apparatus (Base Station)
- 13:: Signal Reception Processing Unit
- 14:: UE Monitor Unit
- 15:: HO Determination Unit
- 16:: X2/S1 Message Transmission and Reception Processing Unit
- 17:: Traffic Monitor Unit
- 18:: RS Intermittence Determination Unit
- 20:: Scheduler
- 21:: Signal Transmission Processing Unit
- 50:: Terminal Apparatus (Terminal)
- 53:: Signal Reception Processing Unit
- 54:: HO Execution Unit
- 55:: Measurement Execution Unit
- 56:: Signal Transmission Processing Unit

## Claims

1. A radio base station apparatus for performing radio communication with a terminal apparatus, the radio base station apparatus comprising:
an intermittence determination unit which controls to be transmitted a reference signal over a first transmission period in a second cell, when the intermittence determination unit receives a first message including a quality of a first cell subordinate to the radio base station or a quality of the second cell subordinate to the radio base station apparatus or another radio base station apparatus, measured by the terminal apparatus in the first cell, and when a reference signal is transmitted over a second transmission period shorter than a first transmission period in the second cell; and
a handover determination unit which receives a second message including the quality of the second cell measured by the terminal apparatus in the first cell based on the reference signal transmitted over the first transmission period and determines a handover destination for the terminal apparatus based on the quality of the second cell.

2. The radio base station apparatus according to claim 1, wherein the intermittence determination unit transmits a first threshold value to the terminal apparatus, and receives the first message transmitted from the terminal apparatus when the quality of the first cell becomes not more than the first threshold value.

3. The radio base station apparatus according to claim 2, wherein the intermittence determination unit receives the first message including the quality of the first cell measured over a measurement period longer than a prescribed measurement period when the reference signal is transmitted over the second transmission period in the first cell

4. The radio base station apparatus according to claim 1, wherein the intermittence determination unit receives the first message transmitted from the terminal apparatus upon measurement of the quality of the second cell, even when the quality of the second cell is not more than a second threshold value.

5. The radio base station apparatus according to claim 4, wherein the intermittence determination unit controls to be transmitted the reference signal over the first transmission period in the second cell when the quality of the second cell included in the first message is less than a reference value, and controls transmission of the reference signal to be continued over the second transmission period in the second cell when the quality of the second cell is less than the reference value.

6. The radio base station apparatus according to claim 1, further comprising a scheduler, wherein
the intermittence determination unit notifies the scheduler to be transmitted the reference signal over the first transmission period in the second cell, when the intermittence determination unit receives the first message including the quality of the first or second cell,
the scheduler performs scheduling based on the notification that the second cell subordinate to the radio base station apparatus transmits the reference signal over the first transmission period, and
the reference signal is transmitted over the first transmission period in the second cell subordinate to the radio base station apparatus based on the scheduling.

7. The radio base station apparatus according to claim 1, further comprising a message transmission and reception processing unit which transmits and receives a message to and from the other radio base station apparatus, wherein
the intermittence determination unit notifies the message transmission and reception processing unit to be transmitted the reference signal over the first transmission period in the second cell, when the intermittence determination unit receives the first message including the quality of the first or second cell,
the message transmission and reception processing unit transmits a third message to be transmitted the reference signal over the first transmission period in the second cell subordinate to the other radio base station apparatus based on the notification, and
the reference signal is transmitted over the first transmission period in the second cell subordinate to the other radio base station apparatus, based on the transmission of the third message.

8. The radio base station apparatus according to claim 1, wherein the intermittence determination unit controls to be transmitted the reference signal over the first transmission period in all the second cell transmitted the reference signal over the second transmission period when the intermittence determination unit receives the first message including the quality of the first cell.

9. The radio base station apparatus according to claim 1, wherein the intermittence determination unit controls to be transmitted the reference signal over the first transmission period in the second cell in which a quality is measured when the intermittence determination unit receives the first message including the quality of the second cell.

10. The radio base station apparatus according to claim 1, wherein the intermittence determination unit determines the second transmission period based on an amount of traffic of signal transmitted and received to and from the terminal apparatus.

11. A terminal apparatus for performing radio communication with a radio base station apparatus, the terminal apparatus comprising:
a measurement execution unit which measures a quality of a first cell subordinate to the radio base station or a quality of a second cell subordinate to the radio base station apparatus or another radio base station apparatus in the first cell, as a first quality, and measures the quality of the second cell as a second quality after the measurement of the first quality; and
a transmission processing unit which generates a first message including the first quality and a second message including the second quality and transmits each of the first and second messages to the radio base station apparatus, wherein
the measurement execution unit measures the quality of the second cell as the first quality based on a reference signal transmitted over a second transmission period shorter than a first transmission period and measures the quality of the second cell as the second quality based on the reference signal transmitted over the first transmission period.

12. A radio communication system, comprising:
a radio base station apparatus; and
a terminal apparatus, wherein
radio communication is performed between the radio base station apparatus and the terminal apparatus,
the radio base station apparatus includes:
an intermittence determination unit which controls to be transmitted a reference signal over a first transmission period in a second cell when the intermittence determination unit receives a first message including a quality of a first cell subordinate to the radio base station apparatus or a quality of the second cell subordinate to the radio base station apparatus or another base station apparatus, measured by the terminal apparatus in the first cell, and when a reference signal is transmitted over a second transmission period shorter than a first transmission period in the second cell; and
a handover determination unit which receives a second message including the quality of the second cell measured by the terminal apparatus in the first cell based on the reference signal transmitted over the first transmission period and determines a handover destination for the terminal apparatus based on the quality of the second cell, and
the terminal apparatus includes:
a measurement execution unit which measures the quality of the first or second cell as a first quality and measures the quality of the second cell as a second quality after the measurement of the first quality; and
a transmission processing unit which transmits to the radio base station apparatus the first message including the first quality and the second message including the second quality.

13. A radio communication method in a radio base station apparatus for performing radio communication with a terminal apparatus, the method comprising:
controlling to be transmitted a reference signal over a first transmission period in a second cell, when the radio base station receives a first message including a quality of a first cell subordinate to the radio base station or a quality of the second cell subordinate to the radio base station apparatus or another base station apparatus, measured by the terminal apparatus in the first cell, and when a reference signal is transmitted over a second transmission period shorter than a first transmission period in the second cell; and
receiving a second message including the quality of the second cell measured by the terminal apparatus in the first cell based on the reference signal transmitted over the first transmission period and determining a handover destination for the
terminal apparatus based on the quality of the second cell.
